# EUROPÄISCHE PATENTSCHRIFT

(11) **EP 3 284 154 B1**
(45) Veröffentlichungstag und Bekanntmachung des Hinweises auf die Patenterteilung: **09.10.2019**
(21) Anmeldenummer: 16704847.9
(22) Anmeldetag: 17.02.2016
(51) Int. Cl.: H02J 3/14, H02J 3/00

(54) **STEUERUNG EINER MIT EINER SICHERUNG GESCHÜTZTEN ENERGIEÜBERTRAGUNG ZWISCHEN ENERGIEVERSORGUNGSNETZ UND ENDNUTZEREINRICHTUNGEN**
CONTROL OF ENERGY TRANSMISSION PROTECTED WITH A FUSE BETWEEN AN ENERGY SUPPLY NETWORK AND END-USER DEVICES
COMMANDE D'UNE TRANSMISSION D'ÉNERGIE PROTÉGÉE PAR UN COUPE-CIRCUIT ENTRE UN RÉSEAU D'ALIMENTATION EN ÉNERGIE ET DES DISPOSITIFS UTILISATEURS FINAUX

(30) Priorität: 20.02.2015 DE 102015102441
(43) Veröffentlichungstag der Anmeldung: 21.02.2018
(73) Patentinhaber: Alpiq Digital AG, 4600 Olten (CH)
(72) Erfinder: HUNZIKER, Urs, 8706 Meilen (CH)
(74) Vertreter: Dilg, Haeusler, Schindelmann Patentanwaltsgesellschaft mbH
(86) Internationale Anmeldenummer: PCT/EP2016/053386
(87) Internationale Veröffentlichungsnummer: WO 2016/131884

(56) Entgegenhaltungen:
- WO-A1-2014/005642
- DE-A1-102011 080 382
- DE-A1-102011 084 216

## Beschreibung

Die Erfindung betrifft eine Vorrichtung und ein Verfahren zum Steuern der Übertragung von elektrischer Energie zwischen einem Energieversorgungsnetz und zumindest einem Teil von einer Mehrzahl von Endnutzereinrichtungen, eine Anordnung, ein computerlesbares Speichermedium und ein Software-Programm.

Es ist üblich, dass elektrische Leitungen mit Sicherungen als Überlastschutz geschützt werden, die definiert zerstört werden, wenn über die elektrische Leitung ein Strom fließt, der bestimmte Schwellenwerte überschreitet. Insbesondere können Schmelzsicherungen zwischen einem Anschluss zum Energieversorgungsnetz und dem Endverbraucher eingesetzt werden. Installationen werden normalerweise so geplant, dass ein Nennstrom der Schmelzsicherung nicht überschritten wird.

Heutige Batteriespeicher sind in der Lage, mit einem hohen Ladestrom geladen zu werden. Bei großen Speichern (zum Beispiel im Bereich eMobility) muss der maximal mögliche Ladestrom dahingehend begrenzt werden, dass nicht im schlimmsten Fall (d.h. unter der Annahme, alle anderen Verbraucher des Gebäudes bzw. der Wohnung auch eingeschaltet sind) die Hauptsicherung durchbrennt. Aus diesem Grund müssen heutige Ladegeräte für große Batterien häufig gedrosselt werden und können nicht mit der für die Batterie maximal möglichen Ladegeschwindigkeit (die mit dem Ladestrom korreliert ist) geladen werden.

Es ist zwar recht selten, dass eine Großzahl der Verbraucher in einem Gebäude oder in einer Wohnung gleichzeitig eingeschaltet sind, aber es darf dennoch deswegen nicht die Hauptsicherung durchbrennen. Es gibt entsprechende Modelle zur Gleichzeitigkeit, die nur von einer Reduktion von 0.9 ausgehen, wenn zwei Teilbereiche parallel an einer übergeordneten Sicherung hängen. Dies bedeutet, dass das Vorhandensein einzelner Stromverbraucher, welche sehr selten einen sehr hohen Energiebedarf haben, dazu führt, dass die gesamte Einspeisung deutlich größer ausgelegt werden muss.

Durch den stark variierenden Energiebezug von Endverbrauchern werden Zuleitungen zudem mit einem höheren Querschnitt ausgelegt als dies für den Langzeitdurchschnitt der elektrischen Energielieferung nötig wäre. Bei einem gleichmäßigeren Energiebezug könnten Ressourcen optimaler eingesetzt werden.

Wenn verschiedene Endnutzer elektrische Leistung aus einem Energieversorgungsnetz beziehen, welche mehrheitlich an der Leistungsgrenze ihres Hausanschlusses sind, wird aufgrund herkömmlicher Planung des Verteilnetzes möglicherweise ein Teil des Verteilnetzes bis an seine Auslegungsgrenze oder darüber hinausgehend belastet, was zu lokalen Blackouts führen kann.

Energieversorgungsnetze gehen dazu über, die Maximalleistung (typischerweise die maximale während einer Viertelstunde verbrauchte Leistung eines Kunden pro Monat) kostenmäßig zu belasten, was bei kumulierenden Einzelverbrauchern für den Endverbraucher zu hohen Stromkosten führt, insbesondere wenn große Ladegeräte (wie sie im Bereich von eMobility vorkommen können oder zunehmend als Speicherbatterie (zum Beispiel im Zusammenhang mit Fotovoltaik oder Windenergie) in einem Gebäude verwendet werden) eingesetzt werden. WO2014/005642 offenbart eine Vorrichtung und Verfahren gemäß der Präambel der Ansprüche 1 und 13. Eine Steuereinrichtung empfängt Anforderungen zur Energieversorgung und bestimmt, ob diese innerhalb der Kapazität einer Sicherung ganz oder teilweise erfüllt werden können.

Es ist eine Aufgabe der vorliegenden Erfindung, ein effektives Übertragen von Energie zwischen einem Energieversorgungsnetz und Endnutzereinrichtungen zu ermöglichen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist eine Vorrichtung zum Steuern der Übertragung von elektrischer Energie zwischen einem Energieversorgungsnetz und zumindest einem Teil von einer Mehrzahl von Endnutzereinrichtungen geschaffen, wobei eine Sensoreinrichtung zum Bereitstellen von für die Menge fließenden elektrischen Stromes (insbesondere für die Menge übertragener elektrischer Energie) indikativer Sensordaten und eine Sicherungseinrichtung zum Unterbrechen der Übertragung elektrischer Energie in einem Überlastfall vorzusehen sind, wobei die Vorrichtung eine Sensorschnittstelle, der von der Sensoreinrichtung für eine Menge fließenden elektrischen Stromes (insbesondere für die Menge übertragener elektrischer Energie) indikative Sensordaten bereitgestellt sind, welche Menge zwischen dem Energieversorgungsnetz und dem zumindest einen Teil der Mehrzahl von Endnutzereinrichtungen übertragen wird, und eine Steuereinrichtung aufweist, die eingerichtet ist, die Menge fließenden elektrischen Stromes (insbesondere die Menge übertragener elektrischer Energie) zumindest zeitweise zu reduzieren (vorzugsweise aber stets einen von Null verschiedenen Stromfluss bzw. Energiefluss aufrechtzuerhalten, d.h. die Menge nicht auf Null zu reduzieren; alternativ kann vorübergehend der Stromfluss bzw. Energiefluss vollständig auf Null reduziert werden), wenn die erhaltenen Sensordaten anzeigen, dass der Überlastfall vorliegt oder dass der Überlastfall bei unverminderter Menge fließenden elektrischen Stromes (insbesondere bei unverminderter Menge übertragener elektrischer Energie) demnächst zu erwarten ist.

Gemäß einem weiteren Ausführungsbeispiel der vorliegenden Erfindung ist eine Anordnung geschaffen, die ein Energieversorgungsnetz, eine Mehrzahl von Endnutzereinrichtungen, eine Sensoreinrichtung zum Bereitstellen von für die zwischen dem Energieversorgungsnetz und zumindest einem Teil der Mehrzahl von Endnutzereinrichtungen übertragene Menge fließenden elektrischen Stromes (insbesondere übertragene Menge elektrischer Energie) indikativen Sensordaten, eine Sicherungseinrichtung zum Unterbrechen der Übertragung elektrischer Energie in einem Überlastfall, und eine Vorrichtung mit den oben beschriebenen Merkmalen zum Steuern der Übertragung von elektrischer Energie zwischen dem Energieversorgungsnetz und zumindest einem Teil der Mehrzahl von Endnutzereinrichtungen aufweist.

Gemäß einem weiteren Ausführungsbeispiel der vorliegenden Erfindung ist ein Verfahren zum Steuern der Übertragung von elektrischer Energie zwischen einem Energieversorgungsnetz und zumindest einem Teil von einer Mehrzahl von Endnutzereinrichtungen bereitgestellt, wobei eine Sensoreinrichtung zum Bereitstellen von für die Menge fließenden elektrischen Stroms (insbesondere für die Menge übertragener elektrischer Energie) indikativer Sensordaten und eine Sicherungseinrichtung zum Unterbrechen der Übertragung elektrischer Energie in einem Überlastfall vorgesehen werden, wobei bei dem Verfahren Sensordaten von der Sensoreinrichtung erhalten werden, wobei die Sensordaten für eine Menge fließenden elektrischen Stroms (insbesondere für die Menge elektrischer Energie) indikativ sind, welche Menge zwischen dem Energieversorgungsnetz und dem zumindest einen Teil der Mehrzahl von Endnutzereinrichtungen übertragen wird, und die Menge fließenden elektrischen Stroms (insbesondere die Menge übertragener elektrischer Energie) zumindest zeitweise reduziert wird, wenn die erhaltenen Sensordaten anzeigen, dass der Überlastfall vorliegt oder dass der Überlastfall bei unverminderter Menge fließenden elektrischen Stroms (insbesondere bei unverminderter Menge übertragener elektrischer Energie) demnächst zu erwarten ist.

In einem computerlesbaren Speichermedium gemäß einem Ausführungsbeispiel der vorliegenden Erfindung ist ein Programm zum Steuern der Übertragung von elektrischer Energie zwischen einem Energieversorgungsnetz und zumindest einem Teil von einer Mehrzahl von Endnutzereinrichtungen gespeichert, welches Programm, wenn es von einem oder mehreren Prozessoren ausgeführt wird, die oben beschriebenen Verfahrensschritte aufweist bzw. durchführt.

Ein Software-Programm (zum Beispiel gebildet durch ein oder mehrere Computerprogramm-Elemente, welche optional auch örtlich verteilt und/oder mit kommunikativem Datenaustausch untereinander verbunden sein können; gegebenenfalls können funktionelle Komponenten der Sensorik in einem intelligenten Steuergerät integriert sein) gemäß einem Ausführungsbeispiel der vorliegenden Erfindung zum Steuern der Übertragung von elektrischer Energie zwischen einem Energieversorgungsnetz und zumindest einem Teil von einer Mehrzahl von Endnutzereinrichtungen weist die oben beschriebenen Verfahrensschritte auf (bzw. führt diese durch oder steuert diese), wenn es von einem oder mehreren Prozessoren der Vorrichtung ausgeführt wird.

Ausführungsbeispiele der vorliegenden Erfindung können sowohl mittels eines Computerprogramms, das heißt einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden.

Im Rahmen der vorliegenden Anmeldung werden unter dem Begriff "Endnutzereinrichtungen" insbesondere an das Energieverteilungsnetz angeschlossene oder anschließbare Nutzereinheiten verstanden, die mindestens eine Energieverbraucheinheit (insbesondere eine elektrische Last, zum Beispiel eine elektrische Heizung), mindestens eine Energieerzeugungseinheit (die eine Energieverbraucheinheit einer Endnutzereinrichtung mit elektrischem Strom versorgen kann und/oder diesen Strom in das Energieversorgungsnetz einspeisen kann, zum Beispiel eine Solaranlage) und/oder mindestens eine Energiezwischenspeichereinheit (die elektrische Energie aus dem Energieversorgungsnetz und/oder von einer Energieerzeugeinheit zwischenspeichern kann, zum Beispiel eine beladbare und entladbare Batterie) aufweisen kann. Möglich ist insbesondere auch ein Inselbetrieb, bei dem nur eine Fotovoltaikanlage und/oder eine Windkraftanlage (die dann als Energieversorgungsnetz fungiert oder fungieren) direkt an eine Last angeschlossen ist. Unterschiedliche Endnutzereinrichtungen können dezentral zueinander und zu dem Energieverteilungsnetz angeordnet sein. Beispiele für Endnutzereinrichtungen sind Gebäudeteile (zum Beispiel eine Wohnung), ein Gebäude, ein privater Nutzer, ein Industrieunternehmen, etc.

Im Rahmen der vorliegenden Anmeldung wird unter dem Begriff "Sicherungseinrichtung" insbesondere eine elektrische Komponente verstanden, die als Überlastschutz in eine Stromleitung verschaltet werden kann. Solange ein übertragener elektrischer Strom innerhalb eines vorbestimmten Korridors um einen Nennwert bleibt, beeinflusst die Sicherungseinrichtung die Übertragung nicht. Um angeschlossene elektrische Komponenten vor einer Schädigung zu bewahren, unterbricht die Sicherungseinrichtung reversibel oder irreversibel den Stromfluss durch die Stromleitung, wenn der übertragene elektrische Strom den vorbestimmten Korridor für einen ausreichend langen Zeitraum überschreitet. Die Größe dieses Zeitraums kann abhängig davon sein, wie weit der tatsächlich übertragene elektrische Strom von dem vorbestimmten Korridor entfernt ist (kann insbesondere umso kleiner sein, je höher der Strom ist und damit, je weiter der Strom von dem Korridor entfernt ist). Eine derartige Sicherungseinrichtung dient anschaulich als Überstromschutz.

Im Rahmen der vorliegenden Anmeldung wird unter dem Begriff "Überlastfall" insbesondere ein Szenario zwischen Energieversorgungsnetz und Endnutzereinrichtungen verstanden, in dem der übertragene elektrische Strom einen vorbestimmten Korridor um einen Nennstrom für einen ausreichend langen Zeitraum verlässt. Der Überlastfall kann eintreten, wenn gleichzeitig viele Endnutzereinrichtungen Energie aus dem Energieversorgungsnetz entnehmen.

Gemäß einem exemplarischen Ausführungsbeispiel ist eine Vorrichtung geschaffen, welche eine von lokalen Endverbrauchereinrichtungen abgenommene Menge elektrischer Energie unter Berücksichtigung von Bedürfnissen des Energieversorgungsnetzes steuert. Hierbei erfolgt die Steuerung derart, dass ein bestehender oder drohender Überlastfall in dem Energieversorgungsnetz sensorisch erkannt wird und noch vor Auslösen (anschaulich "Durchbrennen") einer Sicherungseinrichtung durch Absenken der lokal aus dem Energieversorgungsnetz abgenommenen Energie dazu beigetragen wird, das Auslösen der Sicherungseinrichtung erst gar nicht erst zustande kommen zu lassen. Statt dessen wird der Energiebezug durch die Steuerung so lange gedrosselt (aber vorzugsweise nicht vollständig zum Erliegen gebracht), bis der Überlastfall nicht mehr vorliegt oder nicht mehr droht. Dies ist deshalb vorteilhaft, da für viele Energieabnehmer auf lokaler Basis eine geringfügige zeitweise Reduktion der abgenommenen Energie gar nicht spürbar oder störend ist, so dass eine nennenswerte Beeinträchtigung der lokalen Energieversorgung durch diese Steuermaßnahme nicht zu befürchten ist. Gleichzeitig hat die beschriebene Maßnahme für das gesamte Energieversorgungsnetz äußerst vorteilhafte Auswirkungen, da die Zahl der Fälle, in denen die Sicherungseinrichtung auslöst und die Stromversorgung unterbricht, deutlich reduziert werden können. Dies hat gleichzeitig eine vorteilhafte Rückwirkung auf die Energieversorgungssicherheit der lokalen Energieabnehmer. Indem aber die dezentralen oder lokalen Vorrichtungen ihre Energieabnahmemenge (genauer gesagt ihre Stromabnahmemenge) bei drohendem oder bestehendem Überlastfall erniedrigen, muss das ganze Energieversorgungsnetz nicht mehr für ein Worst-Case-Szenario ausgelegt werden, in dem alle Vorrichtungen die Maximalmenge von elektrischer Energie bzw. elektrischem Strom abziehen. Dadurch ist ein vereinfacht ausbildbares Energieversorgungsnetz bzw. ein weniger störanfälliges Energieversorgungsnetz geschaffen, das nur für Normalbelastungen, nicht mehr aber aufwendig für sehr seltene Extrembelastungen ausgelegt werden muss, da bei deren Vorkommen eine sensorisch ausgelöste Selbstdrosselung erfolgt.

Im Weiteren werden zusätzliche exemplarische Ausführungsbeispiele der Vorrichtung, der Anordnung, des Verfahrens, des computerlesbaren Speichermediums und des Software-Programms beschrieben.

Gemäß einem bevorzugten Ausführungsbeispiel kann die Steuereinrichtung eingerichtet sein, das Steuern basierend auf einer mittels der Sensoreinrichtung erfassten Bezugsstrommenge und/oder Bezugsleistungsmenge durchzuführen. Insbesondere kann die Vorrichtung einen integrierten und/oder mittels Sensorschnittstelle abgesetzten (bzw. getrennt vorgesehenen) Strom- oder Leistungssensor aufweisen, der zumindest einen Teil der Mehrzahl von an Endnutzereinrichtungen übertragenen Leistung und/oder von durch Endnutzereinrichtungen verursachten Strom misst.

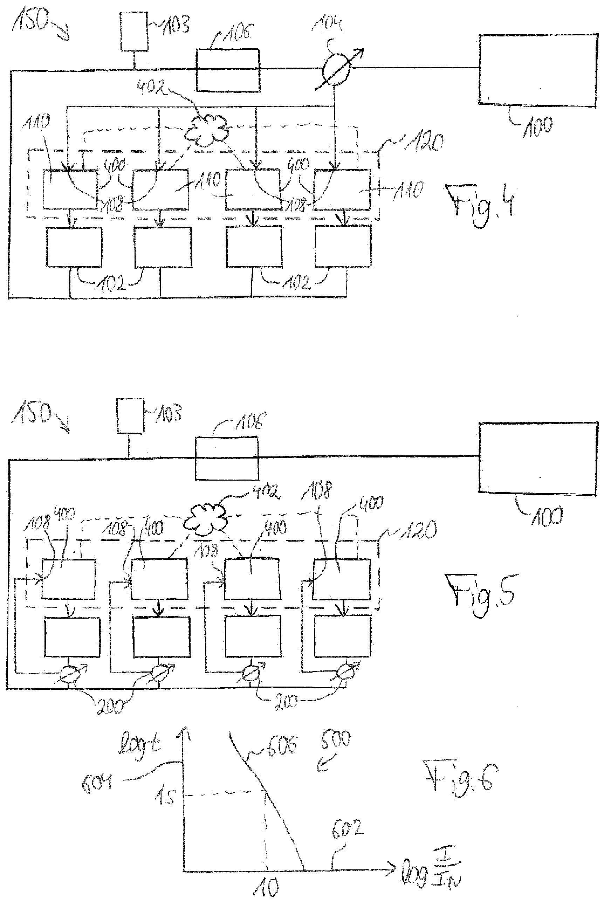

Gemäß einem exemplarischen Ausführungsbeispiel kann die Steuereinrichtung eingerichtet sein, eine Zeit-Menge-Charakteristik der Reduktion (d.h. die quantitative Energieversorgungsreduktion in Abhängigkeit von der Zeit während des Andauerns des Überlastfalls) des fließenden elektrischen Stroms (insbesondere der übertragenen elektrischen Energie) so zu steuern, dass unter Berücksichtigung einer vorbekannten Auslöseverzögerungs-Überlastmaß-Charakteristik der Sicherungseinrichtung (d.h. der zeitlichen Verzögerung des Auslösens der Sicherung in Abhängigkeit von der Stärke der Überschreitung des Nennstroms während des Überlastfalls) ein Unterbrechen der Übertragung elektrischer Energie unterbunden ist. Im Rahmen der vorliegenden Anmeldung wird unter dem Begriff "Zeit-Menge-Charakteristik" insbesondere verstanden, wann und für wie lange welche Menge des fließenden Stroms (insbesondere der übertragenen Energie) reduziert wird. Insbesondere kann darunter eine Funktion der Menge der Stromflussreduktion (insbesondere Energieübertragungsreduktion) von der Zeit ab dem Zeitpunkt des Detektierens des Vorliegens des Überlastfalls oder des Drohens des Überlastfalls verstanden werden. Im Rahmen der vorliegenden Anmeldung wird unter dem Begriff "Auslöseverzögerungs-Überlastmaß-Charakteristik" insbesondere eine Charakteristik des Verhaltens einer Sicherungseinrichtung (zum Beispiel gemäß Figur 6) verstanden, derzufolge der Zeitpunkt des Detektierens des Überlastfalls oder das Drohen desselben gegenüber dem Zeitpunkt des Auslösens des Unterbrechens der Stromversorgung durch die Sicherungseinrichtung um ein Zeitintervall zeitverzögert ist, dessen Dauer von der Stärke des Überlastfalls (d.h. der Differenz zwischen dem Überlaststrom und einem Nennstrom) abhängt. Die Steuerung kann von der Steuereinrichtung allein oder koordiniert mit mindestens einer weiteren an das Energieversorgungsnetz angeschlossenen Steuereinrichtung durchgeführt werden. Vorteilhaft kann selbst bei kurzfristigem Vorliegen des Überlastfalls beschränkt auf einen Zeitraum unterhalb eines überlastintensitätsabhängigen und von der Sicherungseinrichtung abhängigen vorbekannten Auslöseschwellwerts ein Unterbrechen der Übertragung elektrischer Energie und damit des Stromflusses durch Auslösen der Sicherung unterbunden sein. Wenn der Steuereinrichtung die Kennlinie bekannt ist, mit welcher jeweiligen Zeitverzögerung die Sicherungseinrichtung bei einem bestimmten Überlastausmaß auslöst, kann für die zur Verfügung stehende Verzögerungszeit eine optimale Reduktionskennlinie durchgefahren werden und dadurch vorteilhaft eine möglichst mäßige Reduktion der Stromversorgung (insbesondere Energieversorgung) der Endnutzereinrichtungen sowie ein sanftes Absenken erreicht werden.

Gemäß einem exemplarischen Ausführungsbeispiel kann die Steuereinrichtung eingerichtet sein, dass nach einem Stromausfall, die mit der Steuereinrichtung beinflussbaren Lasten zunächst vollständig abgeschaltet bleiben und sich erst nach einer optionalen initialen Ruhezeit (welche auch 0 Sekunden betragen kann) mit einer vorgegebenen Hochfahrkennlinie dem normalen Steuerungsmuster gemäß exemplarischen Ausführungsbeispielen der Erfindung annähert bzw. es erreicht. Anschaulich kann nach einem Stromausfall ein Lastabwurf erfolgen, um Wiedereinschaltspitzen für das Energieversorgungsnetz abzumildern oder zu vermeiden.

Gemäß einem exemplarischen Ausführungsbeispiel kann die Vorrichtung zum Steuern der Übertragung von elektrischer Energie von dem Energieversorgungsnetz zu Energieverbraucheinheiten und/oder Energiezwischenspeichereinrichtungen der Endnutzereinrichtungen eingerichtet sein. Die Energieverbraucheinheiten können zum Beispiel unterschiedliche elektrische Lasten einer Endnutzereinrichtung, zum Beispiel eines Gebäudes oder Gebäudeteils, sein. Die Energiezwischenspeichereinheiten können zum Beispiel wiederaufladbare Batterien sein. Wenn gleichzeitig viele solcher Energieverbrauchseinheiten eine hohe Menge elektrischer Energie aus dem Energieversorgungsnetz anfordern, kann das Energieversorgungsnetz in den Überlastfall gebracht werden, was zu einem unerwünschten Auslösen der Sicherung führt. Durch das Überwachen der Energieversorgungsfähigkeiten des Energieversorgungsnetzes auf sensorischer Ebene und die lokale Reduktion der abgezogenen Energie kann die Auslösung der Sicherung unterdrückt und das Verharren des Systems im Überlastzustand unterbunden werden.

Gemäß einem exemplarischen Ausführungsbeispiel kann die Vorrichtung zum Steuern der Übertragung von elektrischer Energie von Energieerzeugungseinheiten und/oder Energiezwischenspeichereinrichtungen der Endnutzereinrichtungen zu dem Energieversorgungsnetz eingerichtet sein. Ein gleichzeitiges Einspeisen von elektrischer Energie von den Energieverbrauchseinheiten (zum Beispiel lokale Solaranlagen oder lokale Windkraftanlagen), beispielsweise im Fall eines zeitweise erhöhten Energieerzeugungsvolumens dieser lokalen Energieerzeugungseinrichtungen (zum Beispiel bei Vorliegen starker Sonneneinstrahlung auf Solaranlagen oder starker Winde im Bereich von Windkraftanlagen) kann ebenfalls eine Überlast in dem Energieversorgungsnetz hervorgerufen werden. Indem die rückgespeiste Energie in diesem Szenario ebenfalls begrenzt wird, kann ein Betrieb des Energieversorgungsnetzes im Rückspeisebetrieb unter Überlast ebenfalls vermieden werden und ein unerwünschtes Auslösen der Sicherung ebenfalls vermieden werden.

Gemäß einem exemplarischen Ausführungsbeispiel kann die Steuereinrichtung eine Mehrzahl von Steuereinheiten aufweisen, von denen jede einer zugehörigen der Endnutzereinrichtungen zugeordnet ist, und wobei eine jeweilige der Steuereinheiten eingerichtet ist, das Steuern autonom von und kooperierend mit anderen Steuereinheiten durchzuführen. Somit kann die Vorrichtung gebildet sein aus mehreren dezentralen oder lokalen Steuereinheiten, die jeweils einzelnen Energieverbrauchseinheiten und/oder Energieerzeugungseinheiten zugeordnet sind. Es hat sich herausgestellt, dass in einem solchen Fall die dezentrale oder autonome Steuerung der einzelnen Energieverbrauchseinheiten und/oder Energieerzeugungseinheiten bei den Betreibern solcher Einheiten zu einer höheren Akzeptanz führt als im Falle einer zentralen Steuerung, zum Beispiel durch eine dem Energieversorgungsnetz zugeordnete zentrale Steuereinrichtung. Durch die autonome Steuerung kann somit die Basis der Endverbraucher, die zur Teilnahme an dem auch globale Erfordernisse des Energieversorgungsnetzes berücksichtigenden Systems bereit sind, erhöht werden und damit die Energieversorgungssicherheit insgesamt verbessert werden. Um die bei einem rein autonomen Steuern drohenden Gefahren, zum Beispiel ein Aufschaukeln der Energieeinspeisung oder der Energieabnahme durch ein gleichförmiges Verhalten der autonom gesteuerten Steuereinheiten, zu verhindern, kann die Steuerung neben dem autonomen Charakter mit einer kooperativen Komponente versehen werden. Dies bedeutet, dass die Steuereinheiten untereinander Daten austauschen können und somit ihr Verhalten zum Vermeiden unerwünschter Kollektiveffekte (zum Beispiel ein unerwünschtes Aufschaukeln) synchronisieren oder harmonisieren können. Die Kooperativiät des Steuerverhaltens kann optional auch durch eine zentrale Koordinierungseinrichtung unterstützt werden, die mit den einzelnen Steuereinheiten kommuniziert, und die den einzelnen autonomen Steuereinheiten Steuerungsvorschläge unterbreitet, um solche unerwünschten Kollektiveffekte zu vermeiden. Auf den Austausch dieser Kooperationsdaten unter den Steuerungseinheiten kann auch verzichtet werden, indem alle beteiligten Steuerungen über einen (insbesondere gemeinsamen oder jeweils separaten) Sensor den sich einstellenden Gesamtstrom aller Verbraucher messen und mittels einer Schwingungsdämpfungsalgorithmik diese Kooperativität erreichen.

Gemäß einem exemplarischen Ausführungsbeispiel kann die Steuereinrichtung als den Endnutzereinrichtungen übergeordnete Steuereinrichtung ausgebildet sein, welche die Endnutzereinrichtungen zentral steuert. Gemäß einer solchen alternativen Ausgestaltung kann von einer zentralen Instanz aus, mithin mit insgesamt geringem Steueraufwand, die Steuerung vieler lokaler oder dezentraler Energieerzeugungseinheiten und/oder Energieabnahmeeinheiten bewerkstelligt werden. Ein gleichförmiges Verhalten der einzelnen Steuereinheiten kann dadurch von zentraler Stelle aus vermieden werden. Eine solche zentrale Steuereinrichtung kann zum Beispiel Teil des Energieversorgungsnetzes bilden.

Gemäß einem exemplarischen Ausführungsbeispiel kann die Steuereinrichtung eingerichtet sein, entsprechend vorgegebener Relevanzinformation hinsichtlich einer Relevanz der einzelnen Endnutzereinrichtungen die Übertragung der elektrischen Stroms (insbesondere der Energie) von dem Energieversorgungsnetz zu den Endnutzereinrichtungen basierend auf der Relevanzinformation zu steuern. Wenn zur Verhinderung oder Beseitigung eines Überlastfalls eine Reduktion der lokal abgenommenen Energie vonnöten ist, kann dies für die einzelnen lokalen Endnutzereinrichtungen eine unterschiedlich starke Bedeutung haben. Energieverbraucheinheiten mit geringer zeitlicher Trägheit, bei denen eine gegenwärtige Reduktion des Energiebedarfs für einen Benutzer spürbare unerwünschte Folgen hat (zum Beispiel eine Kochplatte, die die gewünschte Kochleistung zeitweise nicht mehr aufbringen kann), können daher mit einer geringeren oder gar keiner Energiereduktion beaufschlagt werden. Zeitlich trägere Energieverbraucheinheiten (wie zum Beispiel eine Fußbodenheizung, bei der eine zeitweise Reduzierung der Energieversorgung aufgrund des Trägheitsverhaltens mit einer Zeitkonstante im Bereich von Stunden für einen Benutzer gar nicht spürbar ist), können daher verstärkt zur Energiereduktion angesteuert werden. Es ist im Rahmen der Definition der Relevanzinformation auch möglich, durch einen Benutzer der Endnutzereinrichtung benutzerspezifisch festlegen zu lassen, welche Energieverbraucheinheiten der Benutzer für relevanter (zum Beispiel Aufrechterhaltung einer Internetverbindung), und welche er für weniger relevant hält (zum Beispiel Beheizung des Swimmingpools). Indem jeder der Endbenutzereinrichtungen ein entsprechender (zum Beispiel numerischer) Relevanzwert zugeordnet wird, können (zum Beispiel fest vorgegeben oder benutzerseitig einstellbar) die Auswirkungen der zeitweisen Reduktion der Energieabnahme flexibel eingestellt werden. Die Spürbarkeit der zeitweisen Energiereduktion kann dadurch weiter verringert werden.

Gemäß einem exemplarischen Ausführungsbeispiel kann die Steuereinrichtung eingerichtet sein, die Steuerung basierend auf einer Netzqualitätscharakteristik, insbesondere basierend auf einem Zeitverlauf der Netzqualitätscharakteristik, des Energieversorgungsnetzes zu steuern. Im Rahmen der vorliegenden Anmeldung kann unter dem Begriff "Netzqualitätscharakteristik" eine auf eine Qualität des Energieversorgungsnetzes bezogene Charakteristik verstanden werden, die in dem Energieversorgungsnetz in der Vergangenheit herrschte, gegenwärtig herrscht und/oder in der Zukunft herrschen wird. Indem die Netzqualität des Energieversorgungsnetzes sensorisch überwacht wird, kann das Auftreten oder das zukünftige Erwarten eines Überlastfalls besonders sensitiv erkannt werden, so dass dem schnell gegengesteuert werden kann. Die Netzqualität kann dabei durch Abtasten eines Energiesignals ermittelt werden, das in dem Energieversorgungsnetz bereitgestellt wird. Zum Beispiel kann der Stromverlauf oder der Spannungsverlauf über der Zeit gemessen werden und beim Auftreten von Schwankungen ein Problem erkannt werden.

Gemäß einem exemplarischen Ausführungsbeispiel kann die Netzqualitätscharakteristik indikativ sein für die von dem Energieversorgungsnetz gegenwärtig und/oder in absehbarer Zukunft leistbare Energieversorgungskapazität, insbesondere eine Energieknappheit oder ein Energieüberangebot. Ein Absinken einer Versorgungsspannung oder eines Versorgungsstroms kann auf eine Energieknappheit hindeuten. Ein Anstieg der Versorgungsspannung oder des Versorgungsstroms kann auf ein Überangebot von Energie hindeuten.

Gemäß einem exemplarischen Ausführungsbeispiel kann die Netzqualitätscharakteristik ein von dem Energieversorgungsnetz bereitgestellter elektrischer Spannungswert und/oder ein von dem Energieversorgungsnetz sich durch Verbrauch ergebender elektrischer Stromwert und/oder ein Crest Faktor der von dem Energieversorgungsnetz bereitgestellten Versorgung und/oder mindestens ein insbesondere diskontinuierliches Spannungsereignis in der von dem Energieversorgungsnetz gestellten elektrischen Spannung und/oder eine von dem Energieversorgungsnetz bereitgestellte Leistung und/oder eine von dem Energieversorgungsnetz bereitgestellte Energie und/oder Flicker-Ereignisse in dem von dem Energieversorgungsnetz bereitgestellten Signal und/oder mindestens eine Harmonische oder Zwischenharmonische der oder des von dem Energieversorgungsnetz bereitgestellten elektrischen Spannung oder elektrischen Stroms und/oder ein Rundsteuersignal (wobei die sogenannte Rundsteuertechnik (ripple control) zur Fernsteuerung von Stromverbrauchern durch Energieversorgungsunternehmen eingesetzt wird) und/oder eine Asymmetrie in der oder dem von dem Energieversorgungsnetz bereitgestellten elektrischen Spannung oder elektrischen Strom und/oder eine Frequenz der oder des von dem Energieversorgungsnetz bereitgestellten elektrischen Spannung oder elektrischen Strom sein. Diese oder andere Netzqualitätscharakteristika können durch die Steuereinrichtung durch eine Analyse des Energieversorgungsnetzes oder von Teilen davon ermittelt werden und in die Steuerung eingehen. Dadurch erfolgt die Steuerung aufgrund objektiver, physikalischer Parameter des Energieversorgungsnetzes und somit in präziser Weise.

Gemäß einem exemplarischen Ausführungsbeispiel kann die Netzqualität (zumindest ein Teil der Gesamtqualität) anhand von Informationen hinsichtlich einer Impedanz von zumindest einem Teil des Energieversorgungsnetzes charakterisiert werden. Anders ausgedrückt kann ein entsprechender Impedanzwert die Netzqualitätscharakteristik darstellen. Gemäß einer ersten Ausgestaltung kann die Erfassung der Netzqualitätscharakteristik durch eine Messung einer Frequenzabhängigkeit der Impedanz erfolgen. Die Frequenzabhängigkeit der Impedanz erlaubt eine Bestimmung oder Abschätzung, wie und welche Kommunikation über Netzversorgungsleitungen möglich ist und/oder welche Störung (zum Beispiel Messung einer Dämpfung von harmonischen Oberwellen) im lokalen System vorhanden ist. Gemäß einer zweiten Ausgestaltung kann die Erfassung der Netzqualitätscharakteristik durch eine Messung der Impedanz zur Bestimmung eines Innenwiderstandes des Energieversorgungsnetzes erfolgen. Dadurch kann zum Beispiel sichergestellt werden, dass auf der Endverbraucherseite im Rahmen vorgesehener Energiebezugsmengen keine Unterspannung (zum Beispiel weniger als Nennspannung minus 10 %) bzw. bei Energieeinspeisung keine Überspannung (d.h. mehr als Nennspannung plus 6 %, insbesondere plus 10 %) auftritt. Gemäß einer dritten, besonders bevorzugten Ausgestaltung kann die Erfassung der Netzqualitätscharakteristik auch eine Messung eines Zeitverlaufs von Impedanz (insbesondere Quellenimpedanz) und Nennspannung beinhalten. Dies erlaubt eine konkrete Aussage über einen lokalen Netzauslastungszustand.

Jede der genannten Formen der Netzimpedanzmessung (und insbesondere die Kombination der verschiedenen Formen) kann zur dynamischen Abschätzung der aktuellen Quellenspannung, Parallellast und Innenimpedanz des Niederspannungsnetzes sowie der (Zukunfts-)Projektion dieser Werte verwendet werden.

Gemäß einem exemplarischen Ausführungsbeispiel kann die Vorrichtung eine Netzqualitätserfasseinrichtung aufweist, die eingerichtet sein, die Netzqualitätscharakteristik des Energieversorgungsnetzes zu erfassen und der Steuereinrichtung als Basis für das Steuern bereitzustellen. Zum Erfassen der Netzqualität kann ein entsprechender Sensor (zum Beispiel ein Voltmeter oder ein Amperemeter) bereitgestellt werden, der auch als Netzqualitätserfasseinrichtung bezeichnet wird. Dadurch kann die Netzqualität auch auf lokaler Ebene ermittelt werden und ein schnelles Gegensteuern im Falle des Auftretens eines Überlastereignisses ermöglicht werden.

Gemäß einem exemplarischen Ausführungsbeispiel kann die Steuereinrichtung eingerichtet sein, das Steuern basierend auf mindestens einer zeitlichen Ableitung, insbesondere der ersten Ableitung und/oder der zweiten Ableitung, der erfassten Netzqualitätscharakteristik (zum Beispiel eine Spannung oder ein Strom) durchzuführen. Es hat sich herausgestellt, dass das Ermitteln der Steigung und/oder Krümmung der Netzqualität eine noch viel sensiblere Detektion drohender oder bestehender Überlastszenarien ermöglicht als die Überwachung des Netzqualitätsparameters selbst. Durch ein- oder zweimalige mathematische Differenzierung kann somit die Steuerpräzision weiter verbessert werden.

Gemäß einem exemplarischen Ausführungsbeispiel kann zumindest ein Teil der Endnutzereinrichtungen eine Energiezwischenspeichereinrichtung, insbesondere eine selektiv aufladbare und entladbare Batterie, aufweisen. Derartige Energiezwischenspeichereinrichtungen können dafür sorgen, dass im Falle einer Energieknappheit durch gleichzeitiges Anzapfen des Energieversorgungsnetzwerkes durch viele Energieverbraucheinheiten Energie in das Energieversorgungsnetz rückgespeist werden kann. Dadurch können Energiezwischenspeichereinrichtungen dem Eintreten oder Verbleiben eines Überlastzustands entgegenwirken.

Gemäß einem exemplarischen Ausführungsbeispiel kann die Sicherungseinrichtung als den Endnutzereinrichtungen übergeordnete Sicherungseinrichtung ausgebildet und verschaltet sein. Die Sicherungseinrichtung kann somit an zentraler Stelle des Energieversorgungsnetzes angeordnet sein und dadurch sehr wirksam an zentraler Stelle eine Versorgungsunterbrechung zur Unterdrückung von Überlastfällen bewirken. Alternativ oder ergänzend können auch dezentrale Sicherungen vorgesehen werden.

Gemäß einem exemplarischen Ausführungsbeispiel kann die Sicherungseinrichtung als verzögernd ansprechende Schmelzsicherung ausgebildet sein. Indem die Sicherungseinrichtung erst verzögert auf einen Überlastfall anspricht, was insbesondere bei Schmelzsicherungen der Fall ist, kann selbst bei Auftreten eines Überlastfalles durch schnelles Reduzieren der Energieabnahmemenge und/oder Energieeinspeisemenge ein Auslösen der Sicherung verhindert werden. Dadurch ist eine kontinuierliche Energieversorgung selbst bei kurzzeitigem Auftreten eines Überlastfalles möglich.

Gemäß einem exemplarischen Ausführungsbeispiel kann die Steuerung derart ausgelegt sein, dass die Energiebezugsrückregelung bereits früher einsetzt, als dies aufgrund der lokal im Gebäude vorhandenen Sicherungselemente notwendig wäre. Diese konfigurierbare vorzeitige Minderung der vom Energieversorgungsnetz bezogenen elektrischen Energie kann insbesondere dafür eingesetzt werden, dass bei knapper Auslegung der Zuleitung zum Endverbraucher diese Leitung innerhalb der für sie vorgesehenen Betriebsbedingungen gehalten wird. Dies ist insbesondere für Sammelleitungen mit Stichabgängen zwischen Energieversorger und Endverbraucher relevant, wenn Belastbarkeit der Sammelleitung in ihrer Auslegung nicht der Summe der Belastbarkeiten der Stichleitungen entspricht.

Gemäß einem exemplarischen Ausführungsbeispiel kann zumindest ein Teil der Sensoreinrichtung ausgebildet und verschaltet sein als zumindest einem Teil der Endnutzereinrichtungen übergeordnete Sensoreinrichtung und/oder zumindest einem Teil der Endnutzereinrichtungen zugeordnete Sensoreinrichtung. Somit kann die sensorische Erfassung des Vorliegens eines Überlastzustandes oder dessen Drohens an lokaler und/oder zentraler Stelle erfolgen.

Gemäß einem exemplarischen Ausführungsbeispiel kann die Sensoreinrichtung als Stromsensor ausgebildet sein. Der Wert des elektrischen Stroms zwischen dem Energieversorgungsnetz und den dezentralen Endnutzereinrichtungen hat sich als besonders sensibler Parameter für das Auftreten eines Überlastfalls erwiesen.

Gemäß einem exemplarischen Ausführungsbeispiel können die Sensoreinrichtung und die Steuereinrichtung eingerichtet sein, dass ein Zeitraum zwischen dem Erfassen der für das Vorliegen des Überlastfalls indikativen Sensordaten und dem Reduzieren der Menge des fließenden elektrischen Stroms (insbesondere der übertragenen Energie) durch die Steuereinrichtung kürzer als eine Ansprechzeit der Sicherungseinrichtung ist, vor deren Ablauf die Sicherungseinrichtung zur Unterbrechung der Energieübertragung nicht fähig ist. Somit kann mittels der Steuereinrichtung die Energiereduktion schneller eingestellt werden als die Sicherungseinrichtung anspricht. Letztere kann durch Ausgestaltung der Sicherungseinrichtung (insbesondere durch Konfiguration einer Schmelzsicherung) präzise eingestellt werden. Dieses Vorauseilen der Rückregelung kann in der Steuerung so gestaltet werden, dass sie genügend groß/schnell ist, so dass eine allfällige Schmelzsicherung sich nicht derart erwärmt, dass innere Korrosions- oder Schmelzmechanismen partiell in Gang kommen und sich so die (Langzeit-) Lebensdauer des Sicherungselementes nicht negativ entwickelt.

Gemäß einem exemplarischen Ausführungsbeispiel kann der Zeitraum zwischen Erfassen des Sensorsignals und Reduzieren der übertragenen Energiemenge höchstens 1 Sekunde, insbesondere höchstens 100 ms, weiter insbesondere 10 ms betragen. Dadurch kann sichergestellt werden, dass selbst im Auftreten eines Überlastfalls dieser schnell wieder abgebaut werden kann und es somit zu gar keinem Auslösen der Sicherungseinrichtung kommt.

Gemäß einem exemplarischen Ausführungsbeispiel kann eine Anzahl der Endnutzereinrichtungen höchstens 10, insbesondere höchstens 100, weiter insbesondere höchstens 1000 betragen. Die Endnutzereinrichtungen können Kleinanlagen, zum Beispiel Betreiber von Einfamilienhäusern, sein.

Gemäß einem exemplarischen Ausführungsbeispiel kann die Sensoreinrichtung zum Bereitstellen von für einen von den Endnutzereinrichtungen verbrauchten elektrischen Gesamtstrom indikativen Sensordaten eingerichtet sein. Anders ausgedrückt kann die Gesamtbelastung des Energieversorgungsnetzes sensorisch erfasst werden.

Gemäß einem exemplarischen Ausführungsbeispiel kann der Überlastfall dadurch definiert sein, dass eine aktuelle Entnahmestromstärke eine elektrische Grenzstromstärke überschreitet, die wiederum höher ist als eine Nennstromstärke (die einem Normalzustand des Energieversorgungsnetzes entsprechen kann). Erst bei Überschreiten der Grenzstromstärke, noch nicht bei Überschreiten der Nennstromstärke, unterbricht die Sicherungseinrichtung die Übertragung der elektrischen Energie.

Im Folgenden werden exemplarische Ausführungsbeispiele der vorliegenden Erfindung mit Verweis auf die folgenden Figuren detailliert beschrieben.
Figur 1 bis Figur 5 zeigen Anordnungen zum Steuern der Übertragung von elektrischer Energie zwischen einem Energieversorgungsnetz und einer Mehrzahl von Endnutzereinrichtungen gemäß exemplarischen Ausführungsbeispielen der Erfindung.
Figur 6 zeigt ein Diagramm, das die Auslösecharakteristik einer Sicherungseinrichtung einer Anordnung gemäß einem exemplarischen Ausführungsbeispiel der Erfindung darstellt.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden:
Gemäß einem exemplarischen Ausführungsbeispiel der Erfindung ist ein Maximalleistungssensor in Kombination mit einer Hauptsicherung bereitgestellt.

Durch eine als Stromsensor ausgebildete Sensoreinrichtung mit sehr schneller Reaktionszeit kann bei der als Hauptsicherung ausgebildeten Sicherungseinrichtung der Gesamtstrom eines Energiebeziehers gemessen werden. Da vorzugsweise für die Sicherungseinrichtung eingesetzte Schmelzsicherungen ein verzögertes Ansprechen haben, kann so mittels einer Steuereinrichtung dafür gesorgt werden, dass ein Nennstrom der Sicherungseinrichtung nicht überschritten wird, beziehungsweise wenn er überschritten wird, er so schnell reduziert werden kann, dass die Sicherungseinrichtung nicht anspricht. Diese Steuereinrichtung kann auf nachgeschaltete Verbraucher wirken und so schnell die Überlast reduzieren oder die Maximallast beschränken. Analog dazu kann das Prinzip auch auf Subsysteme in einer Installation angewandt werden.

Dies bedeutet, dass Systeme mit einer derartigen Steuereinrichtung nicht mehr so ausgelegt werden müssen, dass der konventionelle Gleichzeitigkeitsfaktor geplant werden muss, sondern dass zum Beispiel mehrere Subsysteme mit hohem Stromverbrauch parallel ohne Gleichzeitigkeitsplanung realisiert werden können. So können zum Beispiel an einer 40 A übergeordneten Sicherung (zum Beispiel einer Hauptsicherung), fünf Bezieher mit 25 A Anschlusswert (Selektivität ist so immer noch gewährleistet) angeschlossen werden, solange diese mittels der beschriebenen Steuereinrichtung eine entsprechende kooperative Parallelität des Energieverbrauchs in obigem Sinne erreichen.

Durch die beschriebene Steuereinrichtung gemäß einem exemplarischen Ausführungsbeispiel der Erfindung ergibt sich ein über die Zeit ausgeglichener Leistungsfluss vom Energieversorgungsnetz zum Endverbraucher (d.h. zu den Endnutzereinrichtungen), oder (im Falle einer Energieeinspeisung in das Energieversorgungsnetz) in umgekehrter Richtung. Dadurch können Überkapazitäten reduziert und Reserveauslegungen vermindert werden. Dies betrifft vor allem den Übergang vom Energieversorgungsnetz zum Endverbraucher. Gerade im Energieversorgungswert werden aber die Leistungsverbrauchsspitzen häufig zwischen mehreren Benutzern gemittelt. Auch größere Leitungen haben eine bestimmte Überlastkapazität (zum Beispiel für eine Stunde).

Für diese Thematik hilft folgende Zusatzfunktion entsprechend einem exemplarischen Ausführungsbeispiel der Erfindung: Durch eine Netzqualitätsmessung kann der momentane Netzzustand ermittelt und bei geschickten Vorhersagealgorithmen ein zukünftiger projiziert werden. So ist es neben der eigentlichen Optimierung betreffend elektrische Leistungsgrenzen zusätzlich möglich, eine für das Energieversorgungsnetz geeignete oder optimale Leistungsbezugsmenge (auch über die Zeit betrachtet) einzusteuern.

Bei Bleiakkumulatoren ist ein Prozess unter dem Namen Sulfatierung bekannt, welcher sich dadurch kennzeichnet, dass bei Nichtgebrauch oder häufigem Gebrauch mit Strömen deutlich unter dem Nominalstrom sich eine schwefelhaltige Schicht auf den Elektroden niederschlägt und die Leistungsfähigkeit der Batterie reduziert. Durch den häufigen Wechsel der Stromstärken durch die beschriebene Steuereinrichtung gemäß einem exemplarischen Ausführungsbeispiel der Erfindung (insbesondere durch Pulsung beim Hochfahren der Bezugsströme und dadurch Hochfahren der Ladeströme) kann bei Bleiakkumulatoren die Sulfatierung unterdrückt, verhindert oder sogar (zum Beispiel durch Aufsprengung oder ähnliche Effekte) abgelöst werden. Da in einem Verfahren gemäß einem exemplarischen Ausführungsbeispiel der Erfindung Maximalladeströme (zum Beispiel nach Vorgabe eines Herstellers) nicht überschritten werden, können auch die mit üblichen Formierungsverfahren verbundenen Risiken der Überstromansteuerung unterdrückt oder eliminiert werden.

Ein entsprechendes Prinzip kann gemäß einem anderen exemplarischen Ausführungsbeispiel auch zur maximalen Rückspeisung in ein Netz verwendet werden, so dass die rückgespeiste Leistung der maximalen Anschlussleitungsauslegung entspricht und unabhängig vom Eigenbedarf ist. Die Maximalleistung der Steuerung kann auch auf einen Wert unter der Auslegungsgrenze konfiguriert werden, so dass das System als Maximalleistungsbeschränker funktioniert.

Gemäß einem exemplarischen Ausführungsbeispiel der Erfindung können an einer Systemsicherung größere Verbraucher (zum Beispiel eMobility-Ladegeräte) angeschlossen werden. Dies kann insbesondere mit einer höheren Leistung erfolgen, als die Systemsicherung erlauben würde, weil durch die Leistungsüberwachung der Systemsicherung und der so erfolgenden Steuerung der Ladegeräte der maximal bezogene Strom nicht über dem maximal abgesicherten Strom liegt. Dabei kann der maximal verfügbare Strom auf verschiedene Ladegräte aufgeteilt werden.

Gemäß einem anderen exemplarischen Ausführungsbeispiel der Erfindung kann die Steuerung mittels der Steuereinrichtung auch so erfolgen, dass jedes Ladegerät eine autonome Steuerung beinhaltet. Dies hat den vorteilhaften Effekt, dass keine hierarchisch übergeordnete Einheit vorhanden sein muss. Diese autonomen Substeuerungen haben die Eigenschaft, untereinander kooperativ zu regeln.

Gemäß noch einem anderen exemplarischen Ausführungsbeispiel können mittels der Steuereinrichtung Wärmepumpen, insbesondere leistungsgeregelte Wärmepumpen, gesteuert werden. Dadurch kann das bei Renovationen häufig angetroffene Problem der zu niedrigen Anschlussleistung des Energieversorgungsnetzes gelöst werden (d.h., dass die Hauptsicherung eigentlich zu schwach wäre, um sowohl Wärmepumpe als auch restliche Verbraucher der Endnutzereinrichtung zu betreiben).

Gemäß einem weiteren exemplarischen Ausführungsbeispiel kann eine bei einem Endverbraucher installierte Phasenschiebereinheit (Blindstromkompensationseinheit) vorgesehen werden, die bei gegebenen Versorgungsleitungen leistungsfähiger ausgelegt werden kann als herkömmlich.

Ferner können sich Subsysteme bei einem Endverbraucher so steuern, dass weniger wichtige Verbraucher dann automatisch abgeschaltet werden, wenn wichtigere benötigt werden (zum Beispiel kann eine träge Wärmepumpe oder eine Boilerladung ausgeschaltet oder stark heruntergeregelt werden, wenn ein Kochherd eingeschaltet wird).

Dabei wird gemäß einem exemplarischen Ausführungsbeispiel als Vorgabe für die Steuerung nicht unbedingt als das Maximum die Anschlussleitungsauslegung genommen, sondern kann auch ein Mittelwert der bezogenen Energie verwendet werden (wodurch die Maximalleistung weiter reduziert werden kann).

Gemäß weiteren exemplarischen Ausführungsbeispielen können komplexere Realisierungsformen eingesetzt werden, die verschiedene Parameter und Sensorwerte miteinander verknüpfen können und so ein optimales Ergebnis in Bezug auf die vorgegebenen Benutzerbedürfnisse und -prioritäten erreichen können.

Gemäß einem exemplarischen Ausführungsbeispiel der Erfindung ist eine Steuereinrichtung bereitgestellt, wobei eine Sensoreinrichtung an einer übergeordneten Sicherungseinrichtung einen momentanen Stromverbrauch berücksichtigt und entsprechend eines vorgesehenen Maximums den Stromverbrauch einer untergeordneten Einheit (insbesondere mindestens einer Endnutzereinrichtung) reduziert. Vorteilhaft kann die Sensoreinrichtung den Strom an einer Hauptsicherung und/oder an einem wesentlichen Unterstrang des Energieverteilnetzes (intern oder extern) eines Endverbrauchersystems messen und/oder mitgeteilt bekommen. Vorzugsweise erfolgt die Stromverbrauchsreduktion so schnell, dass die vorteilhaft als (Schmelz-) sicherung ausgebildete Sicherungseinrichtung nicht durchbrennt (typischerweise innerhalb einer Halbwelle (was ungefähr 10ms entsprechen würde), innerhalb 100ms oder innerhalb 1s). Gemäß einem exemplarischen Ausführungsbeispiel kann die Steuerung unter Berücksichtigung von Ergebnisdetails einer Netzqualitätsmessung die optimale Energiebezugsmenge ermitteln und steuern.

Gemäß einem exemplarischen Ausführungsbeispiel ist eine kooperative und/oder kolaborative Steuereinrichtung bereitgestellt, welche durch eine Sensoreinrichtung an einer insbesondere übergeordneten Sicherungseinrichtung den momentanen Stromverbrauch berücksichtigt und entsprechend des vorgesehenen Maximums den Stromverbrauch einer untergeordneten Einheit (insbesondere an einer Endnutzereinrichtung) reduziert. Die Kooperativiät/Kolaborativität kann dergestalt sein, dass mehrere Steuereinheiten in der beschriebenen Weise parallel betrieben werden können. Dabei können die Daten einer gemeinsamen Sensoreinrichtung verwendet werden. Alternativ oder ergänzend kann auch jede Steuereinheit ihre eigene Sensoreinrichtung haben. Die maximale Anzahl paralleler Steuerungen kann zum Beispiel 10, 100 oder 1000 betragen. Optional kann die kolaborative und/oder kooperative Steuerung derart erfolgen, dass dadurch keine Schwingungen und kein Über- oder Unterschwingen auftreten kann, also alle Regelungen parallel zusammenarbeiten.

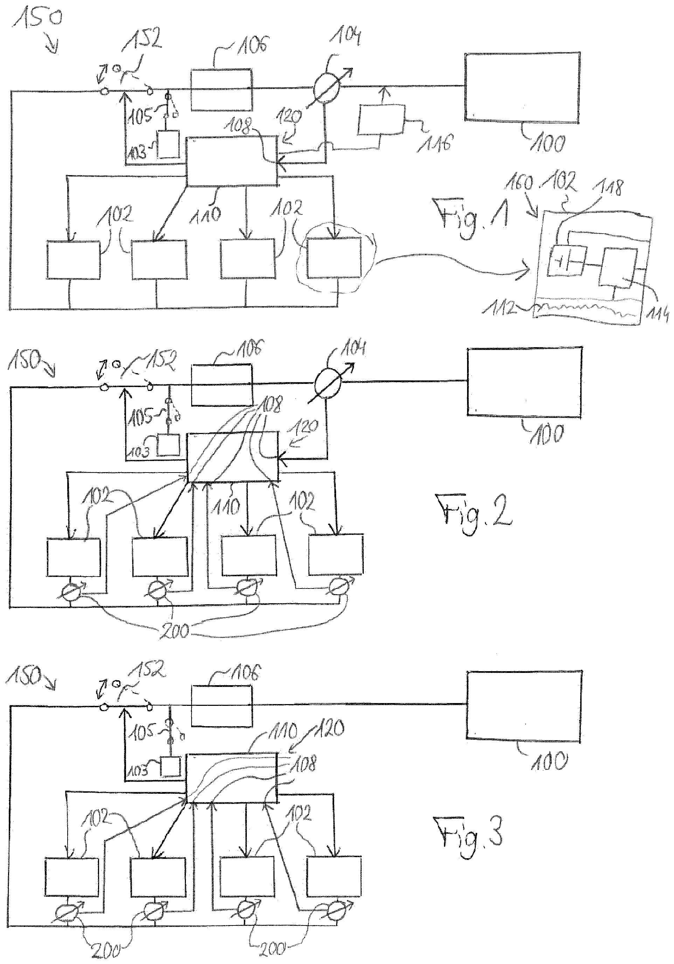

**Figur 1** zeigt eine Anordnung 150 zum Steuern der Übertragung von elektrischem Strom und somit elektrischer Energie zwischen einem Energieversorgungsnetz 100 und einer Mehrzahl von Endnutzereinrichtungen 102 gemäß einem exemplarischen Ausführungsbeispiel der Erfindung.

Zu der Anordnung 150 gehören das Energieversorgungsnetz 100, die Mehrzahl von Endnutzereinrichtungen 102, eine als Stromsensor oder Amperemeter ausgebildete Sensoreinrichtung 104 zum Bereitstellen von für die Menge zwischen Energieversorgungsnetz 100 und Endnutzereinrichtungen 102 übertragenem elektrischen Strom (insbesondere übertragener elektrischer Energie) indikativer Sensordaten, eine als verzögernd ansprechende Schmelzsicherung ausgebildete Sicherungseinrichtung 106 zum Unterbrechen der Übertragung elektrischer Energie und somit des Stromflusses in einem Überlastfall und eine Vorrichtung 120 zum Steuern der Übertragung von elektrischer Energie zwischen dem Energieversorgungsnetz 100 und der Endnutzereinrichtungen 102. In dem gezeigten Ausführungsbeispiel ist die Sensoreinrichtung 104 zum Bereitstellen von für einen von den Endnutzereinrichtungen 102 verbrauchten elektrischen Gesamtstrom indikativen Sensordaten eingerichtet. Diesen Gesamtstrom muss das Energieversorgungsnetz 100 aufbringen.

Die Vorrichtung 120 weist eine Sensorschnittstelle 108 auf, die mit der Sensoreinrichtung kommunikativ gekoppelt und eingerichtet ist (oder einen Teil der Vorrichtung 120 selbst darstellt), von der Sensoreinrichtung 104 für eine Menge elektrischen Stroms indikative Sensordaten zu erhalten, welche Menge zwischen dem Energieversorgungsnetz 100 und den Endnutzereinrichtungen 102 übertragen wird. Die Vorrichtung 120 enthält ferner eine zum Beispiel als Prozessor ausgebildete Steuereinrichtung 110, die eingerichtet ist, die Menge des übertragenen elektrischen Stroms zumindest zeitweise zu reduzieren, sofern die erhaltenen Sensordaten anzeigen, dass der Überlastfall vorliegt oder dass der Überlastfall bei unverminderter Menge übertragener elektrischer Energie (gegebenenfalls unter Heranziehung eines Vorhersagemodells) demnächst zu erwarten ist.

Die Steuereinrichtung 110 ist eingerichtet, eine Zeit-Menge-Charakteristik der Reduktion des übertragenen elektrischen Stroms (also die Funktion der Reduktion der Übertragungsstrommenge von der Zeit ab Feststellung des Vorliegens oder Drohens eines Überlastfalls) so zu steuern, dass unter Berücksichtigung einer vorbekannten Auslöseverzögerungs-Überlastmaß-Charakteristik (also eines verzögerten Durchbrennens der Schmelzsicherung abhängig von der Stärke der Überschreitung eines Nennstroms im Überlastfall, siehe Figur 6) der Sicherungseinrichtung 106 ein Unterbrechen der Übertragung elektrischer Energie unterbunden ist. Somit kann selbst bei kurzfristigem Vorliegen des Überlastfalls beschränkt auf einen Zeitraum unterhalb eines überlastintensitätsabhängigen und von der Sicherungseinrichtung 106 abhängigen vorbekannten Auslöseschwellwerts durch vorübergehendes Verringern der transportierten Strommenge ein Durchbrennen der Sicherungseinrichtung 106 unterbunden werden und eine zumindest eingeschränkte Energieversorgung der Endnutzereinrichtungen 102 aufrechterhalten bleiben. Die Sensoreinrichtung 104 und die Steuereinrichtung 110 sind gemeinsam eingerichtet, dass ein Zeitraum zwischen dem Erfassen der für das Vorliegen des Überlastfalls indikativen Sensordaten und dem Reduzieren der Menge des übertragenen Strom durch die Steuereinrichtung 110 kürzer als eine Ansprechzeit der Sicherungseinrichtung 106 ist, vor deren Ablauf die Sicherungseinrichtung 106 die Energieübertragung nicht unterbricht.

Wie ein Detail 160 in Figur 1 zeigt, kann jede der Endnutzereinrichtungen 102 mindestens eine Energieerzeugeinheit 114 (im gezeigten Beispiel eine Wärmepumpe) und/oder eine mindestens Energieverbraucheinheit 112 (im gezeigten Beispiel eine Fußbodenheizung) und/oder mindestens eine Energiezwischenspeichereinrichtung 118 (im gezeigten Beispiel eine selektiv aufladbare und entladbare Batterie, d.h. ein wiederaufladbarer Akku) aufweisen. Bedarfsweise kann die Energiezwischenspeichereinrichtung 118 Energie in das Energieversorgungsnetz 100 rückspeisen, sofern dieses eine gewünschte Energiemenge gegenwärtig nicht bereitstellen kann. Die Energiezwischenspeichereinrichtung 118 kann aber auch die Wärmepumpe mit elektrischer Energie versorgen oder mit Energie aus dem Energieversorgungsnetz 100 aufgeladen werden. Je nach Richtung des Energieflusses und der jeweiligen Schaltungsauslegung wird dabei die Sicherungseinrichtung 106 zusätzlich belastet oder entlastet.

Gemäß Figur 1 ist die Sicherungseinrichtung 106 als den Endnutzereinrichtungen 102 übergeordnete globale Sicherungseinrichtung 106 ausgebildet und verschaltet. Ferner gemäß Figur 1 die Sensoreinrichtung 104 als den Endnutzereinrichtungen 102 übergeordnete Sensoreinrichtung 104 ausgebildet und verschaltet. Die Steuereinrichtung 110 ist als den Endnutzereinrichtungen 102 übergeordnete Steuereinrichtung 110 ausgebildet, welche die Endnutzereinrichtungen 102 allesamt zentral steuert.

Die Sensoreinrichtung 104 und die Steuereinrichtung 110 sind eingerichtet, dass ein Zeitraum von zum Beispiel 50ms zwischen dem Erfassen der für das Vorliegen des Überlastfalls indikativen Sensordaten und dem Reduzieren der Menge der übertragenen Energie durch die Steuereinrichtung 110 kürzer als eine Ansprechzeit der Sicherungseinrichtung 106 ist, vor deren Ablauf die Sicherungseinrichtung 106 zur Unterbrechung der Energieübertragung nicht fähig ist.

Die Steuereinrichtung 110 ist ferner eingerichtet, entsprechend vorgegebener Relevanzinformation hinsichtlich einer Relevanz der einzelnen Endnutzereinrichtungen 102 die Übertragung von elektrischem Strom von dem Energieversorgungsnetz 100 zu den Endnutzereinrichtungen 102 basierend auf der Relevanzinformation zu steuern. Dies bedeutet, dass nicht alle Endnutzereinrichtungen 102 dasselbe Maß der Reduzierung der ihnen zugeteilten Energie erfahren. Stattdessen kann die Steuereinrichtung 110 bestimmte Endnutzereinrichtungen 102 (denen in der Relevanzinformation ein hoher Relevanzwert zugeordnet ist) priorisieren und diesen ungeachtet des Vorliegens eines Überlastfalls entweder die vollständige gewünschte Energie (insbesondere einen angeforderten Soll-Strom) bereitstellen oder nur eine geringe Reduktion dieser Energie einsteuern. Andere Endnutzereinrichtungen 102 (denen in der Relevanzinformation ein geringerer Relevanzwert zugeordnet ist) können mit einer stärkeren Reduktion der von ihnen angeforderten Energie im Überlastfall beaufschlagt werden (d.h. es kann für diese Endnutzereinrichtungen 102 eine stärkere Reduktion eines tatsächlich bereitgestellten Stroms gegenüber einem angeforderten Soll-Strom eingestellt bzw. vorgegeben werden).

Wie in Figur 1 gezeigt, weil die Vorrichtung 120 zusätzlich eine Netzqualitätserfasseinrichtung 116 auf, die eingerichtet ist, die Netzqualitätscharakteristik (angezeigt zum Beispiel durch eine bereitgestellte Versorgungsspannung) des Energieversorgungsnetzes 100 zu erfassen und der Steuereinrichtung 110 als Basis für das Steuern bereitzustellen. Die Steuereinrichtung 110 kann das Steuern basierend auf einem Zeitverlauf der Netzqualitätscharakteristik und besonders vorteilhaft basierend auf der ersten Ableitung und/oder der zweiten Ableitung der erfassten Netzqualitätscharakteristik durchzuführen. Dies erlaubt eine besonders präzise Steuerung. Die Netzqualitätscharakteristik kann indikativ sein für die von dem Energieversorgungsnetz 100 gegenwärtig und in absehbarer Zukunft leistbare Energieversorgungskapazität und kann insbesondere eine bestehende oder drohende Energieknappheit oder ein bestehendes oder drohendes Energieüberangebot anzeigen.

Figur 1 zeigt also das Szenario, bei dem das Energieversorgungsnetz 100 Energie an die Endnutzereinrichtungen 102 bereitstellt. Die Sensoreinrichtung 104 ermittelt an zentraler Position den Gesamtstrom, der von dem Energieversorgungsnetz 100 zu den Endnutzereinrichtungen 102 übertragen wird. Überschreitet der Gesamtstrom einen vorgegebenen Schwellwert für mehr als einen vorgegebenen Zeitraum, so unterbricht die als Schmelzsicherung ausgebildete Sicherungseinrichtung 106 den Stromfluss. Der Betrieb der elektrischen Lasten am Ort der Endnutzereinrichtungen 102 kommt dadurch zum Erliegen. Alternativ kann die Steuereinrichtung 110 durch Auslösen eines Schalters 152 den Stromfluss auch bewusst unterbrechen. Die Netzqualitätserfasseinrichtung 116 erfasst die Netzqualität und kann zum Beispiel auf einen Überlastfall hindeutende Artefakte im übertragenen Spannungssignal erkennen. Die Steuereinrichtung 110 wird mit den von der Sensoreinrichtung 104 und der Netzqualitätserfasseinrichtung 116 erfassten Daten versorgt und hat Zugriff auf Algorithmen, die basierend auf diesen Messdaten das Vorliegen oder Drohen eines Überlastfalls anzeigen können. Wird ein solcher Überlastfall erkannt, steuert die Steuereinrichtung 108 die Endnutzereinrichtungen 102 derart an, dass diese vorübergehend (das heißt bis zur Behebung des Überlastfalls oder für einen vorgebbaren Sicherungszeitraum darüber hinaus) weniger Strom aus dem Energieversorgungsnetz 100 abziehen als von ihnen eigentlich gewünscht. Da die als Schmelzsicherung ausgebildete Sicherungseinrichtung 106 eine gewisse Verzögerungszeit bis zum Auslösen aufweist, kann selbst beim Auftreten eines Überlastfalls durch ein ausreichend schnelles Reagieren beim Herunterregeln der abgenommenen Energiemengen der Überlastfall wieder abgebaut werden und ein Auslösen der Sicherungseinrichtung 106 vermieden werden. Dadurch ist eine durchgehende Energieversorgung sichergestellt, ohne dass das Energieversorgungsnetz 100 auf Maximalszenarien (das heißt alle Endnutzereinrichtungen 102 ziehen gleichzeitig maximale Energie ab) hin ausgelegt werden muss.

Figur 1 zeigt ferner, dass eine (möglich sind auch mehrere) zusätzliche Endnutzereinrichtung 103 an das Energieversorgungsnetz 100 angeschlossen ist, die nicht von der Steuereinrichtung 110 gesteuert wird. Optional kann der zusätzlichen Endnutzereinrichtung 103 ein Schalter 105 zugeordnet werden. Bei der zusätzlichen mindestens einen Endnutzereinrichtung 103 handelt es sich also um einen oder mehrere unabhängige Verbraucher, die als von der Steuereinrichtung 110 unbeeinflussbare Komponente ausgebildet ist (zum Beispiel ein Kochherd oder eine Abwasserpumpe). Mit der mindestens einen zusätzlichen Endnutzereinrichtung 103 symbolisierte Verbraucher beziehen elektrische Energie aus dem Energieversorgungsnetz 100 aus einer Stromleitung zwischen der Sicherungseinrichtung 106 und dem Schalter 152.

**Figur 2** zeigt eine Anordnung 150 zum Steuern der Übertragung von elektrischer Energie zwischen einem Energieversorgungsnetz 100 und einer Mehrzahl von Endnutzereinrichtungen 102 gemäß einem anderen exemplarischen Ausführungsbeispiel der Erfindung.

Das Ausführungsbeispiel gemäß Figur 2 unterscheidet sich von dem Ausführungsbeispiel gemäß Figur 1 darin, dass zusätzlich zu der zentralen Sensoreinrichtung 104 eine Mehrzahl dezentraler Sensoreinrichtungen 200 vorgesehen sind, welche einen gegenwärtigen Strom (oder einen anderen elektrischen Parameter, der für einen Auslastungsgrad des Energieversorgungsnetzes 100 indikativ ist) erfassen kann. Indem nicht nur die globalen, sondern auch die lokalen Stromdaten am Ort der Endnutzereinrichtungen 102 erfasst werden, kann die Steuerung weiter verfeinert werden.

**Figur 3** zeigt eine Anordnung 150 zum Steuern der Übertragung von elektrischer Energie zwischen einem Energieversorgungsnetz 100 und einer Mehrzahl von Endnutzereinrichtungen 102 gemäß noch einem anderen exemplarischen Ausführungsbeispiel der Erfindung.

Das Ausführungsbeispiel gemäß Figur 3 unterscheidet sich von dem Ausführungsbeispiel gemäß Figur 2 dadurch, dass nur dezentrale, den einzelnen Endnutzereinrichtungen 102 zugeordnete Sensoreinrichtungen 200, aber keine zentrale Sensoreinrichtung 104 vorgesehen sind. Der Steueraufwand kann dadurch reduziert werden.

**Figur 4** zeigt eine Anordnung 150 zum Steuern der Übertragung von elektrischer Energie zwischen einem Energieversorgungsnetz 100 und einer Mehrzahl von Endnutzereinrichtungen 102 gemäß noch einem anderen exemplarischen Ausführungsbeispiel der Erfindung.

Gemäß Figur 4 weist die Steuereinrichtung 400 vier separate Steuereinheiten auf, von denen jede einer zugehörigen der Endnutzereinrichtungen 102 zugeordnet ist. Die Steuereinheiten sind eingerichtet, das Steuern autonom von und kooperierend mit den jeweils anderen Steuereinheiten durchzuführen.

Das Ausführungsbeispiel gemäß Figur 4 unterscheidet sich von dem Ausführungsbeispiel gemäß Figur 1 also insbesondere dadurch, dass anstelle einer einzigen zentralen Steuereinrichtung 108 zum Steuern von mehreren Endnutzereinrichtungen 102 gemäß Figur 4 eine Mehrzahl von dezentralen Steuereinheiten als Steuereinrichtung 400 vorgesehen sind. Außerdem kommunizieren gemäß Figur 4 die einzelnen dezentralen Steuereinheiten über ein Kommunikationsnetzwerk 402, zum Beispiel das Internet, miteinander, um nicht nur autonom, sondern auch kooperierend ein Steuern der einzelnen Endnutzereinrichtungen 102 zu ermöglichen. Dadurch kann zum Beispiel ein unerwünschtes Aufschaukeln durch ein nicht abgestimmtes, gleichförmiges Verhalten mehrerer Steuereinheiten der Steuereinrichtung 400 noch besser vermieden werden.

**Figur 5** zeigt eine Anordnung 150 zum Steuern der Übertragung von elektrischer Energie zwischen einem Energieversorgungsnetz 100 und einer Mehrzahl von Endnutzereinrichtungen 102 gemäß einem weiteren exemplarischen Ausführungsbeispiel der Erfindung.

Das Ausführungsbeispiel gemäß Figur 5 unterscheidet sich von dem Ausführungsbeispiel gemäß Figur 4 dadurch, dass (wie gemäß Figur 2) anstelle der zentralen Sensoreinrichtung 104 eine Mehrzahl von dezentralen Sensoreinrichtungen 200 vorgesehen sind, von denen jede einer der Endnutzereinrichtungen 102 zugeordnet ist.

**Figur 6** zeigt ein Diagramm 600, das die Auslösecharakteristik einer als Schmelzsicherung ausgebildeten Sicherungseinrichtung einer Anordnung 150 gemäß einem exemplarischen Ausführungsbeispiel der Erfindung darstellt.

Das Diagramm 600 hat eine Abszisse 602, entlang derer in logarithmischer Darstellung das Verhältnis eines Ist-Stroms I zu einem Nennstrom I_{N} dargestellt ist. Entlang einer Abszisse 604 ist in logarithmischer Darstellung die Zeit dargestellt. Eine Auslösekurve 606 der Sicherungseinrichtung 106 zeigt an, für welchen Zeitraum t ein durch das Verhältnis I:I_{N} charakterisierter Überlastfall andauern kann, bis die Sicherungseinrichtung 106 auslöst, d.h. durchbrennt. Durch das Reduzieren der übertragenen Energie im Überlastfall in Kombination mit dem verzögerten Auslösen der Sicherungseinrichtung 106 kann durch die Steuerlogik gemäß einem exemplarischen Ausführungsbeispiel der Erfindung das Auslösen der Sicherungseinrichtung 106 somit unterbunden werden, ohne dass die Sicherheit des Gesamtsystems darunter leidet. Sicherungseinrichtungen mit der Auslösekennlinie gemäß Figur 6 können als Hauptsicherung zwischen einem Energieverbraucher (zum Beispiel einem Gebäude) und einem Energieversorger eingesetzt werden. Dies sichert die elektrischen Versorgungs- und Installationsnetze vor Schädigungen (auch aufgrund nicht nur ganz vorübergehender Störungen).

Im Rahmen der vorliegenden Anmeldung kann unter dem Begriff "übertragene Energie", je nach Kontext, insbesondere eine gesamte zwischen dem Energieversorgungsnetz und Endnutzereinrichtungen übertragene Energiemenge oder nur ein Teil der insgesamt über das Energieversorgungsnetz übertragenen Energiemenge, welcher Teil sich auf eine bestimmte Endnutzereinrichtung oder eine Teilgruppe der Endnutzereinrichtungen bezieht, verstanden werden. Insbesondere kann darunter auch nur eine für eine lokale Belastung der Verteilstruktur relevante Energiemenge verstanden werden. Ferner kann der Begriff "übertragene Energie" entweder eine erzeugte Energiemenge (zum Beispiel erzeugt durch das Energieversorgungsnetz oder eine Energieerzeugungseinheit einer Endbenutzereinrichtung) oder eine verbrauchte Energiemenge (zum Beispiel von einer Energieverbraucheinheit einer Endnutzereinrichtung verbraucht oder eine am Energieversorgungsnetz ankommende eingespeiste Energie) bezeichnen. Insbesondere kann die übertragene Energie das Resultat einer erzeugten Energie in Verwendung der Verteilstruktur und in Bezug auf die verbrauchte Energie sein.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung (120) zum Steuern der Übertragung von elektrischer Energie zwischen einem Energieversorgungsnetz (100) und zumindest einem Teil (102) von einer Mehrzahl von Endnutzereinrichtungen (102, 103), wobei eine Sensoreinrichtung (104, 200) zum Bereitstellen von für die Menge fließenden elektrischen Stromes indikativer Sensordaten und eine Sicherungseinrichtung (106) zum Unterbrechen der Übertragung elektrischer Energie in einem Überlastfall vorzusehen sind, wobei die Vorrichtung (120) aufweist:
eine Sensorschnittstelle (108), der von der Sensoreinrichtung (104, 200) für eine Menge fließenden elektrischen Stromes indikative Sensordaten bereitgestellt sind, welche Menge zwischen dem Energieversorgungsnetz (100) und dem zumindest einen Teil (102) der Mehrzahl von Endnutzereinrichtungen (102, 103) übertragen wird; und
eine Steuereinrichtung (110, 400), die eingerichtet ist, die Menge fließenden elektrischen Stromes zumindest zeitweise zu reduzieren, wenn die erhaltenen Sensordaten anzeigen, dass der Überlastfall vorliegt oder dass der Überlastfall bei unverminderter Menge fließenden elektrischen Stromes demnächst zu erwarten ist; **dadurch gekennzeichnet, dass** die Steuereinrichtung (110, 400) eingerichtet ist, die Steuerung basierend auf einer Netzqualitätscharakteristik des Energieversorgungsnetzes (100) zu steuern.

2. Vorrichtung (120) gemäß Anspruch 1, wobei die Vorrichtung (120) zumindest eines der folgenden Merkmale aufweist:
die Vorrichtung (120) ist eingerichtet zum Steuern der Übertragung von elektrischer Energie von dem Energieversorgungsnetz (100) zu Energieverbraucheinheiten (112) und/oder Energiezwischenspeichereinrichtungen (118) der Endnutzereinrichtungen (102);
die Vorrichtung (120) ist eingerichtet zum Steuern der Übertragung von elektrischer Energie von Energieerzeugungseinheiten (114) und/oder Energiezwischenspeichereinrichtungen (118) der Endnutzereinrichtungen (102) zu dem Energieversorgungsnetz (100);
die Steuereinrichtung (110, 400) weist eine Mehrzahl von Steuereinheiten auf, von denen jede einer zugehörigen der Endnutzereinrichtungen (102) zugeordnet ist, und wobei eine jeweilige der Steuereinheiten eingerichtet ist, das Steuern autonom von und kooperierend mit anderen Steuereinheiten durchzuführen.

3. Vorrichtung (120) gemäß einem der Ansprüche 1 bis 2, wobei die Vorrichtung (120) zumindest eines der folgenden Merkmale aufweist:
die Steuereinrichtung (110, 400) ist ausgebildet als eine den Endnutzereinrichtungen (102) übergeordnete Steuereinrichtung (110, 400), welche die Endnutzereinrichtungen (102) zentral steuert;
die Steuereinrichtung (110, 400) ist eingerichtet, entsprechend vorgegebener Relevanzinformation hinsichtlich einer Relevanz der einzelnen Endnutzereinrichtungen (102) die Reduzierung des von dem Energieversorgungsnetz (100) zu den Endnutzereinrichtungen (102) fließenden Stroms den einzelnen Endnutzereinrichtungen (102) basierend auf der Relevanzinformation zuzuweisen.

4. Vorrichtung (120) gemäß einem der Ansprüche 1 bis 3, wobei
die Steuereinrichtung (110, 400) eingerichtet ist, die Steuerung basierend auf einem Zeitverlauf der Netzqualitätscharakteristik des Energieversorgungsnetzes (100) zu steuern.

5. Vorrichtung (120) gemäß einem der Ansprüche 1 bis 4, wobei
die Netzqualitätscharakteristik indikativ ist für die von dem Energieversorgungsnetz (100) gegenwärtig und/oder in absehbarer Zukunft leistbare Energieversorgungskapazität, insbesondere eine Energieknappheit oder ein Energieüberangebot.

6. Vorrichtung (120) gemäß einem der Ansprüche 1 bis 5, wobei
die Netzqualitätscharakteristik zumindest eine aus der Gruppe aufweist, die besteht aus einer Impedanz von zumindest einem Teil des Energieversorgungsnetzes (100), einem von dem Energieversorgungsnetz (100) bereitgestellten elektrischen Spannungswert, einem von dem Energieversorgungsnetz (100) sich durch Verbrauch ergebenden elektrischen Stromwert, einem Crest Faktor der von dem Energieversorgungsnetz (100) bereitgestellten Versorgung, mindestens einem insbesondere diskontinuierlichen Spannungsereignis in der von dem Energieversorgungsnetz (100) bereitgestellten elektrischen Spannung, einer von dem Energieversorgungsnetz (100) bereitgestellten Leistung, einer von dem Energieversorgungsnetz (100) bereitgestellten Energie, Flicker-Ereignissen in dem von dem Energieversorgungsnetz (100) bereitgestellten Signal, mindestens einer Harmonischen oder Zwischenharmonischen der oder des von dem Energieversorgungsnetz (100) bereitgestellten elektrischen Spannung oder elektrischen Stroms, einem Rundsteuersignal, einer Asymmetrie in der oder dem von dem Energieversorgungsnetz (100) bereitgestellten elektrischen Spannung oder elektrischen Strom, und einer Frequenz der oder des von dem Energieversorgungsnetz (100) bereitgestellten elektrischen Spannung oder elektrischen Stroms.

7. Vorrichtung (120) gemäß einem der Ansprüche 1 bis 6, wobei
die Vorrichtung (120) eine Netzqualitätserfasseinrichtung (116) aufweist, die eingerichtet ist, die Netzqualitätscharakteristik des Energieversorgungsnetzes (100) zu erfassen und der Steuereinrichtung (110, 400) als Basis für das Steuern bereitzustellen; wobei insbesondere
die Steuereinrichtung (110, 400) eingerichtet ist, das Steuern basierend auf mindestens einer zeitlichen Ableitung, insbesondere der ersten Ableitung und/oder der zweiten Ableitung, der erfassten Netzqualitätscharakteristik durchzuführen.

8. Vorrichtung (120) gemäß einem der Ansprüche 1 bis 7, wobei
die Steuereinrichtung (110, 400) eingerichtet ist, das Steuern basierend auf einer mittels der Sensoreinrichtung (104, 200) erfassten Bezugsstrommenge und/oder Bezugsleistungsmenge durchzuführen.

9. Vorrichtung (120) gemäß einem der Ansprüche 1 bis 8, wobei
die Steuereinrichtung (110, 400), insbesondere allein oder koordiniert mit mindestens einer weiteren an das Energieversorgungsnetz (100) angeschlossenen Steuereinrichtung (110, 400), eingerichtet ist, eine Zeit-Menge-Charakteristik der Reduktion des fließenden elektrischen Stroms so zu steuern, dass unter Berücksichtigung einer vorbekannten Auslöseverzögerungs-Überlastmaß-Charakteristik der Sicherungseinrichtung (106) ein Unterbrechen der Übertragung elektrischer Energie, insbesondere selbst bei kurzfristigen Vorliegens des Überlastfalls beschränkt auf einen Zeitraum unterhalb eines überlastintensitätsabhängigen und von der Sicherungseinrichtung (106) abhängigen vorbekannten Auslöseschwellwerts, unterbunden ist.

10. Anordnung (150), aufweisend:
ein Energieversorgungsnetz (100);
eine Mehrzahl von Endnutzereinrichtungen (102, 103);
eine Sensoreinrichtung (104, 200) zum Bereitstellen von Sensordaten, die für die Menge zwischen dem Energieversorgungsnetz (100) und zumindest einem Teil der Mehrzahl von Endnutzereinrichtungen (102, 103) fließenden elektrischen Stromes indikativ sind;
eine Sicherungseinrichtung (106) zum Unterbrechen der Übertragung elektrischer Energie in einem Überlastfall;
eine Vorrichtung (120) gemäß einem der Ansprüche 1 bis 9 zum Steuern der Übertragung von elektrischer Energie zwischen dem Energieversorgungsnetz (100) und zumindest einem Teil (102) der Mehrzahl von Endnutzereinrichtungen (102, 103).

11. Anordnung (150) gemäß Anspruch 10, wobei die Anordnung (150) zumindest eines der folgenden Merkmale aufweist:
zumindest ein Teil der Endnutzereinrichtungen (102, 103) weist auf eine Energiezwischenspeichereinrichtung (118), insbesondere eine selektiv aufladbare und entladbare Batterie;
die Sicherungseinrichtung (106) ist als den Endnutzereinrichtungen (102,103) übergeordnete Sicherungseinrichtung (106) ausgebildet und verschaltet;
die Sicherungseinrichtung (106) ist als verzögernd ansprechende Schmelzsicherung und/oder Sicherungsautomat und/oder als Leistungsschutzschalter ausgebildet;
zumindest ein Teil der Sensoreinrichtung (104, 200) ist ausgebildet und verschaltet als zumindest einem Teil der Endnutzereinrichtungen (102) übergeordnete Sensoreinrichtung (104, 200) und/oder zumindest einem Teil der Endnutzereinrichtungen (102) zugeordnete Sensoreinrichtung (104, 200);
die Sensoreinrichtung (104, 200) ist als Stromsensor ausgebildet;
die Sensoreinrichtung (104, 200) und die Steuereinrichtung (110, 400) sind eingerichtet, dass ein Zeitraum zwischen dem Erfassen der für das Vorliegen des Überlastfalls indikativen Sensordaten und dem Reduzieren der Menge des fließenden elektrischen Stroms durch die Steuereinrichtung (110, 400) kürzer als eine Ansprechzeit der Sicherungseinrichtung (106) ist, vor deren Ablauf die Sicherungseinrichtung (106) die Energieübertragung nicht unterbricht,
wobei insbesondere
der Zeitraum höchstens 1 Sekunde, insbesondere höchstens 100 ms, weiter insbesondere 10 ms beträgt.

12. Anordnung (150) gemäß einem der Ansprüche 10 bis 11, wobei die Anordnung (150) zumindest eines der folgenden Merkmale aufweist:
eine Anzahl der Endnutzereinrichtungen (102, 103) beträgt höchstens 1000, insbesondere höchstens 100, weiter insbesondere höchstens 10;
die Sensoreinrichtung (104, 200) ist eingerichtet zum Bereitstellen von für einen von den Endnutzereinrichtungen (102) verbrauchten elektrischen Gesamtstrom indikativen Sensordaten;
der Überlastfall ist definiert durch Überschreiten einer elektrischen Grenzstromstärke, die höher ist als eine Nennstromstärke, wobei erst bei Überschreiten der Grenzstromstärke die Sicherungseinrichtung (106) die Übertragung der elektrischen Energie unterbricht;
ein anderer Teil (103) der Mehrzahl von Endnutzereinrichtungen (102, 103) ist eingerichtet, unabhängig von und ungesteuert von der Steuereinrichtung (110, 400) zu operieren.

13. Verfahren zum Steuern der Übertragung von elektrischer Energie zwischen einem Energieversorgungsnetz (100) und zumindest einem Teil von einer Mehrzahl von Endnutzereinrichtungen (102), wobei eine Sensoreinrichtung (104, 200) zum Bereitstellen von für die Menge fließenden elektrischen Stromes indikativer Sensordaten und eine Sicherungseinrichtung (106) zum Unterbrechen der Übertragung elektrischer Energie in einem Überlastfall vorgesehen werden, wobei das Verfahren aufweist:
Erhalten von Sensordaten von der Sensoreinrichtung (104, 200), wobei die Sensordaten für eine Menge fließenden elektrischen Stromes indikativ sind, welche Menge zwischen dem Energieversorgungsnetz (100) und dem zumindest einen Teil der Mehrzahl von Endnutzereinrichtungen (102) übertragen wird;
zumindest zeitweises Reduzieren der Menge fließenden elektrischen Stromes, wenn die erhaltenen Sensordaten anzeigen, dass der Überlastfall vorliegt oder dass der Überlastfall bei unverminderter Menge fließenden elektrischen Stromes demnächst zu erwarten ist; **dadurch gekennzeichnet, dass** das Steuern durch eine Steuereinrichtung (110, 400) basierend auf einer Netzqualitätscharakteristik des Energieversorgungsnetzes (100) erfolgt.

14. Computerlesbares Speichermedium, in dem ein Programm zum Steuern der Übertragung von elektrischer Energie zwischen einem Energieversorgungsnetz (100) und zumindest einem Teil von einer Mehrzahl von Endnutzereinrichtungen (102) gespeichert ist, welches Programm, wenn es von einem Prozessor (110) ausgeführt wird, das Verfahren gemäß Anspruch 13 ausführt oder steuert.

15. Software-Programm zum Steuern der Übertragung von elektrischer Energie zwischen einem Energieversorgungsnetz (100) und zumindest einem Teil von einer Mehrzahl von Endnutzereinrichtungen (102), welches Software-Programm, wenn es von einem Prozessor (110) ausgeführt wird, das Verfahren gemäß Anspruch 13 ausführt oder steuert.

## Claims

1. Device (120) for controlling the transmission of electrical energy between an energy supply network (100) and at least a portion (102) of a plurality of end user facilities (102, 103), wherein a sensor device (104, 200) for providing sensor data that are indicative for the amount of flowing electrical current and a protection device (106) for interrupting the transmission of electrical energy in a case of an overload are to be provided, wherein the device (120) has:
a sensor interface (108), to which sensor data that are indicative for the amount of flowing electrical current are provided from the sensor device (104, 200), which amount is transmitted between the energy supply network (100) and the at least a portion (102) of the plurality of end user facilities (102, 103); and
a control device (110, 400), which is configured to reduce at least temporarily the amount of flowing electrical current, if the received sensor data indicate that the case of an overload is on hand or that the case of an overload is to be expected soon for an unreduced amount of flowing electrical current;
**characterized in that** the control device (110, 400) is configured to control the controlling on the basis of a network quality characteristic of the energy supply network (100).

2. Device (120) according to claim 1, wherein the device (120) has at least one of the following features:
the device (120) is configured to control the transmission of electrical energy from the energy supply network (100) to energy consumption units (112) and/or temporary energy storage devices (118) of the end user facilities (102);
the device (120) is configured to control the transmission of electrical energy from energy generation units (114) and/or temporary energy storage devices (118) of the end user facilities (102) to the energy supply network (100);
the control device (110, 400) has a plurality of control units, each one of which is associated to a related one of the end user facilities (102), wherein a respective one of the control units is configured to perform the controlling autonomously from and cooperatingly with other control units.

3. Device (120) according to any one of the claims 1 to 2, wherein the device (120) has at least one of the following features:
the control device (110, 400) is configured as a control device (110, 400) which is superordinate to the end user facilities (102), and which controls the end user facilities (102) centrally;
the end user facilities (102) is configured to assign, according to predetermined relevance information in respect of a relevance of the individual end user facilities (102), the reduction of the current flowing from the energy supply network (100) to the end user facilities (102) to the individual end user facilities (102) on the basis of the relevance information.

4. Device (120) according to any one of the claims 1 to 3, wherein the control device (110, 400) is configured to control the controlling on the basis of a variation in time of the network quality characteristic of the energy supply network (100).

5. Device (120) according to any one of the claims 1 to 4, wherein the network quality characteristic is indicative for the energy supply capacity which is providable by the energy supply network (100) at present and/or in the foreseeable future, in particular an energy shortage or an energy surplus supply.

6. Device (120) according to any one of the claims 1 to 5, wherein the network quality characteristic has at least one of the group, which consists of: an impedance of at least a portion of the energy supply network (100), an electrical voltage value provided by the energy supply network (100), an electrical current value from the energy supply network (100) resulting from consumption, a crest factor of the supply provided by the energy supply network (100), at least one, in particular discontinuous, voltage event in the electrical voltage provided by the energy supply network (100), a power provided by the energy supply network (100), an energy provided by the energy supply network (100), flicker events in the signal provided by the energy supply network (100), at least one harmonic or interharmonic of the electrical voltage or of the electrical current provided by the energy supply network (100), a ripple control signal, an asymmetry in the electrical voltage or in the electrical current provided by the energy supply network (100), and a frequency of the electrical voltage or of the electrical current provided by the energy supply network (100).

7. Device (120) according to any one of the claims 1 to 6, wherein the device (120) has a network quality measuring device (116), which is configured to measure the network quality characteristic of the energy supply network (100) and to provide this to the control device (110, 400) as a basis for the controlling;
wherein in particular the control device (110, 400) is configured to perform the controlling based on at least one time derivative, in particular the first derivative and/or the second derivative, of the measured network quality characteristic.

8. Device (120) according to any one of the claims 1 to 7, wherein the control device (110, 400) is configured to perform the controlling based on an amount of current taken and/or an amount of power taken, measured by the sensor device (104, 400).

9. Device (120) according to any one of the claims 1 to 8, wherein the control device (110, 400) is configured, in particular alone or in coordination with at least one further control device (110, 400) connected to the energy supply network (100), to control a time-amount-characteristic of the reduction of the flowing electrical current so that an interruption of the transmission of electrical energy is prevented in consideration of a pre-known trigger delay-overload degree-characteristic of the protection device (106), in particular even for a short-term being on hand of the case of an overload limited to a time period below a pre-known trigger threshold that is dependent from the overload intensity and from the protection device (106).

10. System (150) having:
an energy supply network (100);
a plurality of end user facilities (102, 103);
a sensor device (104, 200) for providing sensor data, which are indicative for an amount of electrical current that flows between the energy supply network (100) and the at least a portion of the plurality of end user facilities (102, 103);
a protection device (106) for interrupting the transmission of electrical energy in a case of an overload;
a device (120)) according to any one of the claims 1 to 9 for controlling the transmission of electrical energy between the energy supply network (100) and the at least a portion (102) of the plurality of end user facilities (102, 103).

11. System (150) according to claim 10, wherein the system (150) has at least one of the following features:
at least a portion of the end user facilities (102, 103) has a temporary energy storage device (118), in particular a battery that is selectively chargeable and dischargeable;
the protection device (106) is configured as a protection device (106) that is superordinate to and interconnected to the end user facilities (102, 103);
the protection device (106) is configured as a fusible cut-out that responds retardingly and/or an automatic cut-out and/or a power protect switch;
at least a portion of the sensor device (104, 200) is configured and interconnected as a sensor device (104, 200) that is superordinate to at least a portion of the end user facilities (102) and/or a sensor device (104, 200) that is associated to at least a portion of the end user facilities (102);
the sensor device (104, 200) is configured as a current sensor;
the sensor device (104, 200) and the control device (110, 400) are configured such that a time period between the measuring of the sensor data that are indicative for the being on hand of the case of an overload and the reducing of the amount of flowing electrical current by the control device (110, 400) is shorter than a response time of the protection device (106), before the expiration of which response time the protection device (106) does not interrupt the energy transmission,
wherein in particular
the time period amounts to at most 1 second, in particular at most 100 ms, further in particular 10 ms.

12. System (150) according to any one of the claims 10 to 11, wherein the system (150) has at least one of the following features:
a number of end user facilities (102, 103) amounts to at most 1000, in particular at most 100, further in particular at most 10;
the sensor device (104, 200) is configured to provide sensor data that are indicative for a total electrical current consumed by the end user facilities (102);
the case of an overload is defined by exceeding a maximum strength of electrical current, which is higher than a nominal strength of current, wherein the protection device (106) interrupts the transmission of electrical energy only upon exceeding the maximum strength of electrical current;
another portion (103) of the plurality of end user facilities (102, 103) is configured to operate independently from and un-controlled by the control device (110, 400).

13. Method for controlling the transmission of electrical energy between an energy supply network (100) and at least a portion (102) of a plurality of end user facilities (102, 103), wherein a sensor device (104, 200) for providing sensor data that are indicative for the amount of flowing electrical current and a protection device (106) for interrupting the transmission of electrical energy in a case of an overload are provided, wherein the method has:
receiving sensor data from the sensor device (104, 200), wherein the sensor data are indicative for an amount of flowing electrical current, which amount is transmitted between the energy supply network (100) and the at least a portion of the plurality of end user facilities (102),
at least temporarily reducing the amount of flowing electrical current, if the received sensor data indicate that the case of an overload is on hand or that the case of an overload is to be expected soon for an unreduced amount of flowing electrical current, **characterized in that**
the controlling is effected by a control device (110, 400) on the basis of a network quality characteristic of the energy supply network (100).

14. Computer-readable storage medium, in which a program for controlling the transmission of electrical energy between an energy supply network (100) and at least a portion of a plurality of end user facilities (102) is stored, which program executes or controls the method according to claim 13, when it is executed by a processor (110).

15. Software program for controlling the transmission of electrical energy between an energy supply network (100) and at least a portion of a plurality of end user facilities (102), which software program executes or controls the method according to claim 13, when it is executed by a processor (110).

## Revendications

1. Appareil (120) de commande de la transmission d'énergie électrique entre un réseau d'alimentation en énergie (100) et au moins une partie (102) d'une pluralité de dispositifs utilisateurs finaux (102, 103), un dispositif de capteur (104, 200) pour fournir des données de capteur indicatives de la quantité de courant électrique s'écoulant et un dispositif de coupe-circuit (106) pour interrompre la transmission d'énergie électrique dans un cas de surcharge étant à prévoir, l'appareil (120) présentant :
une interface de capteur (108), à laquelle sont fournies par le dispositif de capteur (104, 200) des données de capteur indicatives d'une quantité de courant électrique s'écoulant, laquelle quantité est transmise entre le réseau d'alimentation en énergie (100) et au moins une partie (102) de la pluralité de dispositifs utilisateurs finaux (102, 103) ; et
un dispositif de commande (110, 400) qui est conçu pour réduire au moins temporairement la quantité de courant électrique s'écoulant lorsque les données de capteur obtenues indiquent que le cas de surcharge est présent ou qu'il faut s'attendre prochainement au cas de surcharge en cas de non-réduction de la quantité de courant électrique s'écoulant ; **caractérisé en ce que**
le dispositif de commande (110, 400) est conçu pour commander la commande sur la base d'une caractéristique de qualité de réseau du réseau d'alimentation en énergie (100) .

2. Appareil (120) selon la revendication 1, **caractérisé en ce que** l'appareil (120) présente au moins une des caractéristiques suivantes :
l'appareil (120) est conçu pour commander la transmission d'énergie électrique du réseau d'alimentation en énergie (100) à des unités de consommation d'énergie (112) et/ou des dispositifs d'accumulation intermédiaire d'énergie (118) des dispositifs utilisateurs finaux (102) ;
l'appareil (120) est conçu pour commander la transmission d'énergie électrique d'unités de production d'énergie (114) et/ou de dispositifs d'accumulation intermédiaire d'énergie (118) des dispositifs utilisateurs finaux (102) au réseau d'alimentation en énergie (100) ;
le dispositif de commande (110, 400) présente une pluralité d'unités de commande, parmi lesquelles chacune est associée à un correspondant des dispositifs utilisateurs finaux (102), et une respective des unités de commande étant conçue pour exécuter la commande de manière indépendante d'autres unités de commande et de manière coopérative avec celles-ci.

3. Appareil (120) selon l'une quelconque des revendications 1 à 2, **caractérisé en ce que** l'appareil (120) présente au moins une des caractéristiques suivantes :
le dispositif de commande (110, 400) est formé en tant que dispositif de commande (110, 400), de niveau supérieur aux dispositifs utilisateurs finaux (102), qui commande de manière centrale les dispositifs utilisateurs finaux (102) ;
le dispositif de commande (110, 400) est conçu pour, conformément à des informations de pertinence prédéfinies en ce qui concerne une pertinence des différents dispositifs utilisateurs finaux (102), assigner la réduction du courant, s'écoulant du réseau d'alimentation en énergie (100) aux dispositifs utilisateurs finaux (102), aux différents dispositifs utilisateurs finaux (102) sur la base des informations de pertinence.

4. Appareil (120) selon l'une quelconque des revendications 1 à 3, **caractérisé en ce que** le dispositif de commande (110, 400) est conçu pour commander la commande sur la base d'une variation temporelle de la caractéristique de qualité de réseau du réseau d'alimentation en énergie (100).

5. Appareil (120) selon l'une quelconque des revendications 1 à 4, **caractérisé en ce que** la caractéristique de qualité de réseau est indicative de la capacité d'alimentation en énergie, en particulier une pénurie d'énergie ou une suroffre d'énergie, réalisable par le réseau d'alimentation en énergie (100) actuellement et/ou dans un avenir proche.

6. Appareil (120) selon l'une quelconque des revendications 1 à 5, **caractérisé en ce que** la caractéristique de qualité de réseau présente au moins l'un parmi le groupe constitué d'une impédance d'au moins une partie du réseau d'alimentation en énergie (100), d'une valeur de tension électrique fournie par le réseau d'alimentation en énergie (100), d'une valeur de courant électrique du réseau d'alimentation en énergie (100) résultant de la consommation, d'un facteur de crête de l'alimentation fournie par le réseau d'alimentation en énergie (100), d'au moins un événement de tension en particulier discontinu dans la tension électrique fournie par le réseau d'alimentation en énergie (100), d'une puissance fournie par le réseau d'alimentation en énergie (100), d'une énergie fournie par le réseau d'alimentation en énergie (100), d'événements de vacillation dans le signal fourni par le réseau d'alimentation en énergie (100), d'au moins une harmonique ou une harmonique intermédiaire de la tension électrique ou du courant électrique fourni par le réseau d'alimentation en énergie (100), d'un signal de commande centralisée, d'une asymétrie dans la tension électrique ou le courant électrique fourni par le réseau d'alimentation en énergie (100), et d'une fréquence de la tension électrique ou du courant électrique fourni par le réseau d'alimentation en énergie (100).

7. Appareil (120) selon l'une quelconque des revendications 1 à 6, **caractérisé en ce que** l'appareil (120) présente un dispositif de détection de qualité de réseau (116) qui est conçu pour détecter la caractéristique de qualité de réseau du réseau d'alimentation en énergie (100) et pour la fournir au dispositif de commande (110, 400) en tant que base pour la commande ; en particulier
le dispositif de commande (110, 400) étant conçu pour exécuter la commande sur la base d'au moins une dérivée en fonction du temps, en particulier de la dérivée première et/ou de la dérivée seconde, de la caractéristique de qualité de réseau détectée.

8. Appareil (120) selon l'une quelconque des revendications 1 à 7, **caractérisé en ce que** le dispositif de commande (110, 400) est conçu pour exécuter la commande sur la base d'une quantité de courant de référence et/ou d'une quantité de puissance de référence détectée au moyen du dispositif de capteur (104, 200).

9. Appareil (120) selon l'une quelconque des revendications 1 à 8, **caractérisé en ce que** le dispositif de commande (110, 400), en particulier seul ou coordonné avec au moins un autre dispositif de commande (110, 400) relié au réseau d'alimentation en énergie (100), est conçu pour commander une caractéristique temps-quantité de la réduction du courant électrique s'écoulant de sorte que, en considérant une caractéristique préconnue retard de déclenchement-cote de surcharge du dispositif de coupe-circuit (106), une interruption de la transmission d'énergie électrique soit empêchée, en particulier limitée, même en cas d'une présence brève du cas de surcharge, à une période de temps en dessous d'une valeur de seuil de déclenchement préconnue dépendante de l'intensité de la surcharge et dépendante du dispositif de coupe-circuit (106).

10. Système (150), présentant :
un réseau d'alimentation en énergie (100) ;
une pluralité de dispositifs utilisateurs finaux (102, 103) ;
un dispositif de capteur (104, 200) pour fournir des données de capteur qui sont indicatives de la quantité de courant électrique s'écoulant entre le réseau d'alimentation en énergie (100) et au moins une partie de la pluralité de dispositifs utilisateurs finaux (102, 103) ;
un dispositif de coupe-circuit (106) pour interrompre la transmission d'énergie électrique dans un cas de surcharge ;
un appareil (120) selon l'une quelconque des revendications 1 à 9 pour commander la transmission d'énergie électrique entre le réseau d'alimentation en énergie (100) et au moins une partie (102) de la pluralité de dispositifs utilisateurs finaux (102, 103).

11. Système (150) selon la revendication 10, **caractérisé en ce que** le système (150) présente au moins une des caractéristiques suivantes :
au moins une partie des dispositifs utilisateurs finaux (102, 103) présente un dispositif d'accumulation intermédiaire d'énergie (118), en particulier une batterie chargeable et déchargeable de manière sélective ;
le dispositif de coupe-circuit (106) est formé et câblé en tant que dispositif de coupe-circuit (106) de niveau supérieur aux dispositifs utilisateurs finaux (102, 103) ;
le dispositif de coupe-circuit (106) est formé en tant que fusible à réponse retardée et/ou coupe-circuit automatique et/ou disjoncteur automatique ;
au moins une partie du dispositif de capteur (104, 200) est formée et câblée en tant que dispositif de capteur (104, 200) de niveau supérieur à au moins une partie des dispositifs utilisateurs finaux (102) et/ou dispositif de capteur (104, 200) associé à au moins une partie des dispositifs utilisateurs finaux (102) ;
le dispositif de capteur (104, 200) est formé en tant que capteur de courant ;
le dispositif de capteur (104, 200) et le dispositif de commande (110, 400) sont conçus de sorte qu'une période de temps entre la détection des données de capteur, indicatives de la présence du cas de surcharge, et la réduction de la quantité du courant électrique s'écoulant par le dispositif de commande (110, 400) soit plus courte qu'un temps de réponse du dispositif de coupe-circuit (106) avant l'expiration duquel le dispositif de coupe-circuit (106) n'interrompt pas la transmission d'énergie, en particulier
la période de temps étant d'au plus 1 seconde, en particulier d'au plus 100 ms, en particulier encore de 10 ms.

12. Système (150) selon l'une quelconque des revendications 10 à 11, **caractérisé en ce que** le système (150) présente au moins une des caractéristiques suivantes :
un nombre des dispositifs utilisateurs finaux (102, 103) est au plus 1000, en particulier au plus 100, en particulier encore au plus 10 ;
le dispositif de capteur (104, 200) est conçu pour fournir des données de capteur indicatives d'un courant électrique total consommé par les dispositifs utilisateurs finaux (102) ;
le cas de surcharge est défini par un dépassement d'une intensité de courant électrique limite qui est supérieure à une intensité de courant nominale, le dispositif de coupe-circuit (106) interrompant la transmission de l'énergie électrique seulement en cas de dépassement de l'intensité de courant limite ;
une autre partie (103) de la pluralité de dispositifs utilisateurs finaux (102, 103) est conçue pour fonctionner de manière indépendante du dispositif de commande (110, 400) et non commandée par celui-ci.

13. Procédé de commande de la transmission d'énergie électrique entre un réseau d'alimentation en énergie (100) et au moins une partie d'une pluralité de dispositifs utilisateurs finaux (102), un dispositif de capteur (104, 200) pour fournir des données de capteur indicatives de la quantité de courant électrique s'écoulant et un dispositif de coupe-circuit (106) pour interrompre la transmission d'énergie électrique dans un cas de surcharge étant prévus, le procédé présentant :
l'obtention de données de capteur du dispositif de capteur (104, 200), les données de capteur étant indicatives d'une quantité de courant électrique s'écoulant, laquelle quantité est transmise entre le réseau d'alimentation en énergie (100) et au moins une partie de la pluralité de dispositifs utilisateurs finaux (102) ;
au moins une réduction temporaire de la quantité de courant électrique s'écoulant, lorsque les données de capteur obtenues indiquent que le cas de surcharge est présent ou qu'il faut s'attendre prochainement au cas de surcharge en cas de non-réduction de la quantité de courant électrique s'écoulant ; **caractérisé en ce que**
la commande est effectuée par un dispositif de commande (110, 400) sur la base d'une caractéristique de qualité de réseau du réseau d'alimentation en énergie (100) .

14. Support de stockage lisible par ordinateur, dans lequel est stocké un programme pour commander la transmission d'énergie électrique entre un réseau d'alimentation en énergie (100) et au moins une partie d'une pluralité de dispositifs utilisateurs finaux (102), lequel programme, lorsqu'il est exécuté par un processeur (110), exécute ou commande le procédé selon la revendication 13.

15. Programme logiciel pour commander la transmission d'énergie électrique entre un réseau d'alimentation en énergie (100) et au moins une partie d'une pluralité de dispositifs utilisateurs finaux (102), lequel programme logiciel, lorsqu'il est exécuté par un processeur (110), exécute ou commande le procédé selon la revendication 13.
